# EUROPÄISCHE PATENTSCHRIFT

(11) **EP 2 977 146 B1**
(45) Veröffentlichungstag und Bekanntmachung des Hinweises auf die Patenterteilung: **12.02.2020**
(21) Anmeldenummer: 14177831.6
(22) Anmeldetag: 21.07.2014
(51) Int. Cl.: B25B 7/04, B25G 1/08, H02G 1/12

(54) **Zangenteil**
Part of pliers
Élément de pince

(43) Veröffentlichungstag der Anmeldung: 27.01.2016
(73) Patentinhaber: Wezag GmbH Werkzeugfabrik, 35260 Stadtallendorf (DE)
(72) Erfinder: Zinser, Roman, 35279 Neustadt (DE)
(74) Vertreter: REHBERG HÜPPE + PARTNER

(56) Entgegenhaltungen:
- DE-U1- 9 300 908
- DE-U1- 29 613 051
- US-A1- 2013 097 786
- US-B1- 7 334 502

## Beschreibung

### TECHNISCHES GEBIET DER ERFINDUNG

Die Erfindung betrifft ein Zangenteil für eine Zange, insbesondere eine Abisolierzange. Das Zangenteil ist mit einer Vorratseinrichtung ausgestattet, in welcher ein Zubehörteil, insbesondere ein Schneidelement, Klemmelement und/oder Presselement der Zange bevorratet werden kann. Des Weiteren betrifft die Erfindung eine Zange oder eine Abisolierzange, welche mit einem derartigen Zangenteil ausgestattet ist.

### STAND DER TECHNIK

Zangen können über Zubehörteile, insbesondere Austauschteile verfügen. Beispielsweise kann es sich bei einem derartigen Zubehörteil um austauschbare Schneidelemente wie Schneidmesser, Klemmelemente wie Klemmbacken und/oder Presselemente wie Pressgesenke handeln. Hierbei kann ein Austausch eines derartigen Zubehörteils verschleißbedingt erforderlich sein und/oder erfolgen, um Werkstücke unterschiedlicher Geometrien und Typen mit der Zange bearbeiten zu können. Beispielsweise können unterschiedliche Pressgesenke, Klemmbacken oder Schneidmesser Einsatz finden, die unterschiedlich konturierte Schneiden, Gesenkflächen oder Klemmflächen besitzen. Problematisch ist hierbei die Bevorratung der Zubehörteile. Im einfachsten Fall führt der Benutzer die Zubehörteile lose mit sich oder bevorratet diese in einer Werkzeugkiste.

Die Druckschrift WO 2008/116787 A1 offenbart ein Magazin für als Pressgesenkhälften ausgebildete Zubehörteile. Das Magazin ist trommelartig ausgebildet mit mehreren über den Umfang verteilten Aufnahmeräumen, in welchen jeweils ein Paar von Pressgesenkhälften bevorratet werden kann. Eine Einführung der Pressgesenkhälften in einen Aufnahmeraum des Magazins erfolgt, wenn die Pressgesenkhälften an einer Presszange montiert sind, indem die Stirnseite der Presszange, im Bereich welcher die Pressgesenkhälften angeordnet sind, in den Aufnahmeraum eingeführt wird . Die Pressgesenkhälften besitzen jeweils in einem von vorne frei zugänglichen Endbereich Rastnasen, mit welchen federbeaufschlagte Rasthaken des Magazins verrastet werden können. Ist ein Paar von Pressgesenkhälften derart mit dem Magazin verrastet, kann die Presszange aus dem Magazin herausgezogen werden, womit die Pressgesenkhälften infolge der Verrastung mit den Rasthaken in dem Magazin zurückbleiben und in diesem zur Bevorratung gehalten werden. Dies erfordert aber, dass die Pressgesenkhälften über eine geeignete Kopplung mit dem Zangenkopf verbunden sind, welche ohne zusätzliche Sicherung bei dem Herausziehen der Presszange aus dem Magazin eine gleitende demontierende Bewegung der Pressgesenkhälften von dem Zangenkopf ermöglichen. Nachdem ein zuvor benutztes Paar von Pressgesenkhälften wie erläutert an das Magazin abgegeben worden ist, kann die nun ohne Pressgesenkhälften ausgestattete Presszange in einen anderen Aufnahmeraum des Magazins eingebracht werden, um mit einem in diesem Aufnahmeraum angeordneten Paar von Pressgesenkhälften gekoppelt zu werden. Die Kopplung erfolgt wiederum über eine gleitende Bewegung zwischen Presszange und Pressgesenkhälften. Eine Freigabe der Pressgesenkhälften dieses Aufnahmeraums erfolgt über ein manuell veranlasstes Lösen der Rasthaken des Magazins von den Rastnasen der Pressgesenkhälften. Das Magazin gemäß WO 2008/116787 A1 ist separat von der Presszange ausgebildet.

Die Druckschrift DE 201 00 031 U1 schlägt eine Bevorratung von als Pressgesenkhälften ausgebildeten Zubehörteilen unmittelbar an Handhebeln einer Presszange vor. Zu diesem Zweck sind beide Handhebel auf den einander zugewandten Seiten mit von den Endbereichen der Handhebel ausgehenden Führungsnuten ausgestattet, in welche jeweils zwei Pressgesenkhälften hintereinander eingeschoben werden können. Eine Lagesicherung der Pressgesenkhälften in den Führungsnuten erfolgt über Rastkugeln, welche federbeaufschlagt in die Führungsnut hineinragen. Die Pressgesenkhälften besitzen jeweils auf ihrer Unterseite eine Rastvertiefung, in welche in der zu sichernden Position der Pressgesenkhälften die Rastkugeln einrasten. Zangenbacken der Presszangen besitzen entsprechende Führungsnuten, in welche ein zum Verpressen zu verwendendes Paar von Pressgesenkhälften von der Stirnseite der Pressbacken eingeschoben werden in eine Montagerichtung, welche radial zur Schwenkachse der Pressbacken orientiert ist. In der Betriebsstellung werden die Pressgesenkhälften ebenfalls über federbeaufschlagte Rastkugeln in den Zangenbacken gesichert.

Die Druckschrift US 2013/0097786 A1, welche den nächstliegenden Stand der Technik bildet, offenbart eine multifunktionale Zange, welche dem Crimpen, Abisolieren und Schneiden von Kabeln dient und zusätzlich einen Halter für Schraubendreher-Einsätze (sogenannte "Bits") sowie ein Messer beinhaltet. Während der Halter für die Schraubendreher-Einsätze verschwenkbar an einem Handhebel der multifunktionalen Zange gehalten ist, verfügt der andere Handhebel über einen Grundkörper, welcher einen U-förmigen, in Richtung des erstgenannten Handhebels offenen Querschnitt besitzt. Gegenüber diesem Grundkörper ist in dem dem Zangenkopf abgewandten Endbereich ein Deckel verschwenkbar gehalten. Der Deckel verfügt über Sackloch-artige Ausnehmungen, welche sich für geschlossenen Deckel in den Innenraum des Handhebels, welcher von dem Grundkörper und dem Deckel begrenzt ist, öffnen. In diese Ausnehmungen können Schraubendreher-Einsätze eingesteckt werden, welche reibschlüssig oder magnetisch in den Ausnehmungen gehalten sind und so gehalten in dem Innenraum des Handhebels bevorratet werden können.

Weiterer Stand der Technik ist aus DE 93 00 908 U1, DE 296 13 051 U1 und US 7,334,502 B1 bekannt.

### AUFGABE DER ERFINDUNG

Der vorliegenden Erfindung liegt die Aufgabe zugrunde, ein Zangenteil, eine Zange und eine Abisolierzange vorzuschlagen, welches oder welche eine alternative oder verbesserte Bevorratung zumindest eines Zubehörteils ermöglicht.

### LÖSUNG

Die Aufgabe der Erfindung wird erfindungsgemäß mit den Merkmalen der unabhängigen Patentansprüche gelöst. Weitere bevorzugte erfindungsgemäße Ausgestaltungen sind den abhängigen Patentansprüchen zu entnehmen.

### BESCHREIBUNG DER ERFINDUNG

Die Erfindung schlägt ein Zangenteil vor, welches für eine beliebige Zange einsetzbar ist. Hierbei wird unter einer Zange jedwedes Werkzeug verstanden, bei welchem über zwei Handhebel unter Verschwenkung der Handhebel relativ zueinander manuell Betätigungskräfte erzeugt werden, mittels welchen (ggf. mit einer Über- oder Untersetzung durch eine getriebliche Verbindung) mittels der Zange eine Bearbeitung eines Werkstücks erfolgt. Insbesondere sind die Zangenteile bestimmt für eine Abisolierzange.

Erfindungsgemäß ist das Zangenteil zumindest zweistückig ausgebildet, nämlich mit einem Grundkörper sowie einem Deckel. Der Grundkörper kann ein- oder mehrteilig ausgebildet sein und besitzt einen offenen Querschnitt, der durch den ein- oder mehrteilig ausgebildeten Deckel zumindest teilweise verschließbar ist. Der Deckel und der offene Querschnitt des Grundkörpers begrenzen gemeinsam einen Innenraum des Zangenteils. In diesem Innenraum kann (mindestens) ein Zubehörteil angeordnet werden. Möglich ist hierbei, dass das Zubehörteil lose in dem Innenraum angeordnet ist oder dass das Zubehörteil in dem Innenraum fixiert ist. Durch den Deckel kann eine Verliersicherung des Zubehörteils aus dem Innenraum des Zangenteils gebildet sein. Ebenfalls möglich ist, dass durch den Deckel eine (zumindest teilweise) Abdichtung des Innenraums erfolgt, womit der Innenraum und die darin angeordneten Zubehörteile gegenüber Verunreinigungen und/oder Beschädigungen geschützt sind. Möglich ist auch, dass durch den Deckel ein optisch ansprechender Verschluss des Innenraums und eine Gestaltung der Mantelfläche des Zangenteils bereitgestellt ist. Durch die äußere Formgebung des Deckels und des Grundkörpers kann trotz der Bevorratung der Zubehörteile in dem Innenraum des Zangenteils auch eine für die Hand des Benutzers angenehme Außenkontur bereitgestellt werden, was insbesondere dann von Interesse ist, wenn es sich bei dem Zangenteil um einen Handhebel handelt.

Erfindungsgemäß handelt es sich bei dem Zangenteil, welches die Vorratseinrichtung besitzt, um einen Zangenkopf. Möglich ist hierbei auch, dass das Zangenteil, in welches die Vorratseinrichtung integriert ist, eine Zangenbacke ist.

Durchaus möglich ist, dass das Zubehörteil gesonderte Halteorgane, insbesondere einen Vorsprung, eine Vertiefung, ein Stift, ein Rast- oder Verriegelungselement, besitzt, über welches dieses in dem Innenraum des Zangenteils gehalten werden kann. Alternativ oder kumulativ zu der Ausbildung des Zangenteils als Zangenkopf oder Zangenbacke kann das Zubehörteil, welches als austauschbares Schneidelement, Klemmelement oder Presselement ausgebildet ist, zur Bevorratung in dem Zangenteil über denselben Haltemechanismus in dem Innenraum gehalten wie in einer Betriebsstellung in einem Zangenkopf. Damit erübrigt sich die Ausstattung des Zubehörteils mit unterschiedlichen Haltemechanismen einerseits für die Befestigung desselben in der Betriebsstellung an einem Zangenkopf und andererseits das Halten für die Bevorratung in dem Zangenteil.

Sofern das Zubehörteil nicht lose in dem Innenraum bevorratet werden soll, kann dieses beispielsweise an dem Grundkörper des Zangenteils gehalten werden. Dies kann bspw. durch Verrastung in dem Grundkörper, Verschraubung mit diesem oder Einführen in eine von dem Grundkörper ausgebildete Montagenut erfolgen. In bevorzugter Ausgestaltung der Erfindung wird das Zubehörteil aber an dem Deckel gehalten. Dies hat den Vorteil, dass mit Aufklappen des Deckels oder Demontage des Deckels das Zubehörteil besonders einfach zugänglich ist. Durchaus möglich ist sogar, dass einer Zange mehrere Deckel zugeordnet sind, welche austauschbar sind und an welchen jeweils unterschiedliche Zubehörteile gehalten sind. Somit kann der Benutzer die Zange mit einem Deckel mit Zubehörteilen, welche für den bevorstehenden Einsatz geeignet sind, ausstatten, während andere Zubehörteile, welche derzeit nicht von Interesse sind, an einem anderen Deckel bevorratet werden können, welcher dann beispielsweise in einer Werkzeugkiste abgelegt werden kann.

Für die Befestigung und Lagerung des Deckels an dem Grundkörper des Zangenteils gibt es vielfältige Möglichkeiten. Um lediglich einige nicht beschränkende Beispiele zu nennen, kann der Deckel mit dem Grundkörper verschraubt, vernietet, verclipst, in den Grundkörper eingeschoben o. ä. werden. Für eine erfindungsgemäße Ausgestaltung ist der Deckel verschwenkbar an dem Grundkörper des Zangenteils gelagert. In diesem Fall kann der Deckel eine Schließstellung besitzen, in welcher der Deckel den Grundkörper des Zangenteils zumindest teilweise verschleißt, sowie eine Öffnungsstellung, in welcher der Deckel von dem Grundkörper des Zangenteils weggeschwenkt ist und welche die Entnahme und das Einführen von Zubehörteilen in den Deckel oder den Grundkörper des Zangenteils ermöglichen kann.

In bevorzugter Weiterbildung des Zangenteils ist der Deckel in einer Schließstellung mit dem Grundkörper verrastet oder verriegelt.

Für den Haltemechanismus zwischen Zubehörteil und Grundkörper oder Deckel gibt es vielfältige Möglichkeiten. Für einen Vorschlag der Erfindung ist das Zubehörteil über eine Schwalbenschwanz-Verbindung an dem Zangenteil gehalten. Hierbei bildet der Grundkörper oder der Deckel eine Montagenut oder ein Montageelement der Schwalbenschwanz-Verbindung aus. Die Montage der Schwalbenschwanz-Verbindung zwischen Zubehörteil und Deckel oder Grundkörper erfolgt in Richtung einer Montageachse, welche vertikal zu einer Schwenkebene der Handhebel und/oder Zangenbacken der Zange orientiert ist. Hierbei umfasst eine "Schwalbenschwanz-Verbindung" auch Konturen des Montagelements einerseits und der Montagenut andererseits, welche nicht der strengen Form eines "Schwalbenschwanzes" entsprechen, solange noch ein formschlüssiger Eingriff unter Ausbildung mindestens einer geeigneten Hinterschneidung gewährleistet ist. Die erfindungsgemäße formschlüssige Verbindung über eine Art Schwalbenschwanz-Verbindung mit dem formschlüssigen Eingriff eines Montagelements in eine Montagenut ermöglicht einerseits ein einfaches Einführen entlang der durch die Montagenut vorgegebenen Montageachse. Andererseits ermöglicht der formschlüssige Eingriff eine exakte Vorgabe der Ausrichtung des Zubehörteils relativ zu dem Deckel oder dem Grundkörper des Zangenteils. Für den Fall, dass dieselbe Schwalbenschwanz-Verbindung verwendet wird, um das Zubehörteil in der Betriebsstellung am Zangenkopf zu halten, ermöglicht die Schwalbenschwanz-Verbindung eine gute Aufnahme und Übertragung von Kräften zwischen Zangenkopf und Zubehörteil.

Für die Sicherung des Zubehörteils gegenüber dem Deckel oder Grundkörper bei Einsatz einer Schwalbenschwanz-Verbindung gibt es vielfältige Möglichkeiten. Unter Umständen kann die Reibung zwischen der Montagenut und dem Montageelement für diese Sicherung ausreichend sein. Möglich ist, dass auch eine Rast- oder Verriegelungseinrichtung zur Sicherung Einsatz findet. Für einen besonderen Vorschlag der Erfindung ist das Zubehörteil an dem Deckel des Zangenteils gehalten. Hierbei bildet das Zubehörteil das Montagelement der Schwalbenschwanz-Verbindung aus, während der Deckel die Montagenut der Schwalbenschwanz-Verbindung ausbildet. In geschlossenem Zustand des Deckels ist ein Austritt des Montageelements des Zubehörteils aus der Montagenut des Deckels blockiert durch eine den Innenraum begrenzende Innenwandung des Grundkörpers. Dies stellt eine besonders einfache, aber dennoch zuverlässige Sicherung der Position des Zubehörteils in der Montagenut des Deckels dar.

In bevorzugter Ausgestaltung ist das Zangenteil als Handhebel ausgebildet.

Für die Anordnung des Deckels an dem Handhebel gibt es ebenfalls vielfältige Möglichkeiten. Durchaus denkbar, dass der Deckel eine einem Kopf der Zange abgewandte Stirnseite des Handhebels verschließt. Eine vergrößerte Fläche kann der Deckel besitzen (und damit u. U. die Bevorratung einer größeren Zahl von Zubehörteilen ermöglichen), wenn der Deckel im Bereich einer Längsfläche des Handhebels angeordnet ist. Ist beispielsweise der Deckel auf einer Seite des Handhebels angeordnet, welche in montiertem Zustand dem anderen Handhebel abgewandt ist, kann der Deckel frei von dem Handhebel entnommen oder nach außen abgeklappt werden, ohne dass diese Bewegung durch den anderen Handhebel beschränkt oder blockiert ist. Das Entsprechende gilt dann, wenn der Deckel auf einer Seite des Handhebels montiert ist, deren Flächennormale vertikal zu der Schwenkebene der Handhebel orientiert ist. In bevorzugter Ausgestaltung der Erfindung ist aber der Deckel auf der Seite des Grundkörpers angeordnet, welche in einem montierten Zustand des Handhebels dem anderen Handhebel zugewandt ist. Dieser Ausgestaltung liegt insbesondere die Erkenntnis zugrunde, dass bei der Applikation von Handkräften auf die beiden Handhebel keine Beaufschlagung dieser Seite durch die Hand des Benutzers erfolgt. Damit ist der Deckel nicht den Handkräften ausgesetzt. Andererseits sind die Anforderungen an die Konturgebung des Deckels für die Ermöglichung einer guten Haptik des Abisolierwerkzeugs für eine derartige Anordnung des Deckels zumindest verringert. Dieser Ausgestaltung der Erfindung nutzt u.U. auch die Erkenntnis, dass für die auseinandergespreizten Handhebel zwischen den Handhebeln ein ausreichender Zwischenraum verbleibt, um den Deckel zu montieren und demontieren oder auf- und zuzuschwenken.

Eine Montage des Zubehörteils mit dem Handhebel kann in Richtung einer beliebigen Montageachse erfolgen, beispielsweise in Richtung der Längsachse des Handhebels mit Einschieben des Zubehörteils in eine Montagenut. In bevorzugter Ausgestaltung ist aber das Zubehörteil in Richtung einer Montageachse montierbar oder demontierbar, die quer zur Längsachse des Handhebels orientiert ist. Eine Montage in Richtung einer derartigen Montageachse ist besonders einfach, insbesondere da die Montage nicht durch den anderen Handhebel behindert ist. Ein Nachteil der Ausgestaltung gemäß der Druckschrift DE 201 00 031 U1 ist, dass hier die Pressgesenkhälften sukzessive in die Führungsnut des Handhebels einzuführen sind. Wird eine Pressgesenkhälfte benötigt, welche zuerst in die Führungsnut eingesetzt worden ist, erfordert dies, dass zunächst die danach in die Führungsnut eingesetzten Pressgesenkhälften aus dem Handhebel entfernt werden müssen, bevor die benötigte Pressgesenkhälfte aus der Führungsnut herausgeschoben werden kann. Mit erfindungsgemäßer Montage und Demontage des Zubehörteils in Richtung einer Montageachse, die quer zur Längsachse des Handhebels orientiert ist, ist es beispielsweise möglich, mehrere Haltemechanismen für das Zubehörteil, insbesondere Montagenuten, nebeneinander an dem Handhebel anzuordnen, aus welchen dann die jeweils in einem Haltemechanismus oder einer Montagenut gehaltenen Zubehörteile selektiv in Richtung der Montageachse entnommen werden können, ohne dass die anderen Zubehörteile entnommen werden müssen.

In bevorzugter Ausgestaltung ist hierbei der Deckel in seinem dem Zangenkopf zugewandten Endbereich verschwenkbar an dem Grundkörper gelagert. Diese Ausgestaltung macht sich zu Nutze, dass die beiden an einer Zange montierten Handhebel eine Öffnungsstellung besitzen, bei welcher diese einen ungefähr kreissegmentförmigen Zwischenraum freigeben. Mit Anlenkung des Deckels in dem dem Zangenkopf zugewandten Endbereich an dem Grundkörper kann auch der Deckel gegenüber dem Grundkörper eine Öffnungsstellung einnehmen, in welcher Deckel und Grundkörper kreissegmentartig angeordnet sind. Hierbei liegen die beiden einerseits von den Handhebeln sowie andererseits von dem Deckel und dem Grundkörper gebildeten Kreissegmente so ineinander, dass für vorgegebenen Öffnungswinkel der Handhebel eine maximale Öffnung des Deckels gegenüber dem Grundkörper ermöglicht ist.

Erfindungsgemäß kann das Zangenteil der zuvor erläuterten Art Einsatz finden in einer Zange.

Die Erfindung schlägt des Weiteren eine Abisolierzange vor, bei welchem ein Zangenteil der zuvor erläuterten Art Einsatz findet. Das Abisolierwerkzeug verfügt über eine Abisoliereinheit. Eine Betriebsstellung der Abisoliereinheit ist mit einem Schneidhub in einer Schwenkebene durch einen mit dem oder dem Handhebel gebildeten Antrieb veränderbar. Die Abisoliereinheit ist des Weiteren über den Antrieb über einen Abisolierhub entlang einer Abisolierachse bewegbar. Ein das Zubehörteil bildendes Schneidelement ist auswechselbar mit der Abisoliereinheit montiert. Hierbei erfolgt die Montage des Schneidelements mit der Abisoliereinheit über eine Montagenut, in welche formschlüssig ein Montageelement einschiebbar ist. Vorzugsweise besitzt die Abisoliereinheit die Montagenut, während das Montageelement an dem Schneidelement vorgesehen ist. Einsatz findet somit eine mit dem Montagelement und der Montagenut gebildete Schwalbenschwanz-Verbindung zwischen Schneidelement und Abisoliereinheit. Der Grundkörper oder der Deckel des Zangenteils besitzt ein Montageelement oder eine Montagenut, welches oder welche korrespondierend zu dem Montagelement oder der Montagenut der Abisoliereinheit ausgebildet ist. Das Schneidelement ist unter Nutzung seines Montageelements oder seiner Montagenut auch unter Ausbildung einer Schwalbenschwanz-Verbindung an dem Montageelement oder der Montagenut des Deckels oder des Grundkörpers in dem Innenraum des Zangenteils gehalten.

Vorteilhafte Weiterbildungen der Erfindung ergeben sich aus den Patentansprüchen, der Beschreibung und den Zeichnungen. Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Ohne dass hierdurch der Gegenstand der beigefügten Patentansprüche verändert wird, gilt hinsichtlich des Offenbarungsgehalts der ursprünglichen Anmeldungsunterlagen und des Patents Folgendes: weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen.

Die in der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Element wie einem Schneidelement, einer Abisolierbacke oder einer Montagenut die Rede ist, ist dies so zu verstehen, dass genau ein Element, zwei Elemente oder mehr Elemente vorhanden sein können. Diese Merkmale können durch andere Merkmale ergänzt werden oder die einzigen Merkmale sein, aus denen das jeweilige Erzeugnis besteht.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt eine Abisolierzange in einer Einführstellung mit geöffneter Vorratseinrichtung in einer Draufsicht.
- **Fig. 2**: zeigt die Abisolierzange gemäß Fig. 1 in der Einführstellung mit geöffneter Vorratseinrichtung bei Schnittführung parallel zur Zeichenebene gemäß Figur 1.
- **Fig. 3**: zeigt die Abisolierzange gemäß Fig. 1 und 2 in der Einführstellung mit eingeführtem Kabel und geschlossener Vorratseinrichtung bei Schnittführung parallel zur Zeichenebene gemäß Figur 1.
- **Fig. 4**: zeigt die Abisolierzange gemäß Fig. 1 bis 3 bei Schnittführung parallel zur Zeichenebene gemäß Figur 1 in einer Schneid- und Klemmstellung, wobei die Handhebel gegenüber Fig. 3 über einen Schneidhub teilweise geschlossen sind.
- **Fig. 5**: zeigt die Abisolierzange gemäß Fig. 1 bis 4 bei Schnittführung parallel zur Zeichenebene gemäß Figur 1 in einer Abisolierstellung, wobei die Handhebel gegenüber Fig. 4 über einen Abisolierhub weiter geschlossen sind.
- **Fig. 6**: zeigt die Abisolierzange gemäß Fig. 1 bis 5 bei Schnittführung parallel zur Zeichenebene gemäß Figur 1 in einer Wechsel- und Entnahmestellung, wobei die Handhebel gegenüber Fig. 5 weiter geschlossen sind.
- **Fig. 7**: zeigt die Abisolierzange gemäß den Fig. 1 bis 6 in einer räumlichen Darstellung bei demontierten Schneidelement.
- **Fig. 8**: zeigt ein Schneidelement in einer räumlichen Darstellung.
- **Fig. 9**: zeigt in einer Explosionsdarstellung ein Schneidelement und die zugeordnete Abisolierbacke.
- **Fig. 10**: zeigt eine Draufsicht auf eine Abisolierzange mit einem Handhebel, der mit einer separaten Ummantelung gebildet ist.
- **Fig. 11**: zeigt in einer teilgeschnittenen räumlichen Darstellung eine weitere Ausführungsform einer Abisolierzange.
- **Fig. 12**: zeigt in einer veränderten teilgeschnittenen räumlichen Ansicht die Abisolierzange gemäß Fig. 11.
- **Fig. 13**: zeigt einen Zangenkopf einer weiteren Abisolierzange mit in den Zangenkopf integrierten Vorratseinrichtungen für Zubehörteile, wobei hier die Vorratseinrichtungen in einer geöffneten Stellung dargestellt sind.
- **Fig. 14**: zeigt den Zangenkopf gemäß Fig. 13, wobei hier die Vorratseinrichtungen in einer geschlossenen Stellung dargestellt sind.

### FIGURENBESCHREIBUNG

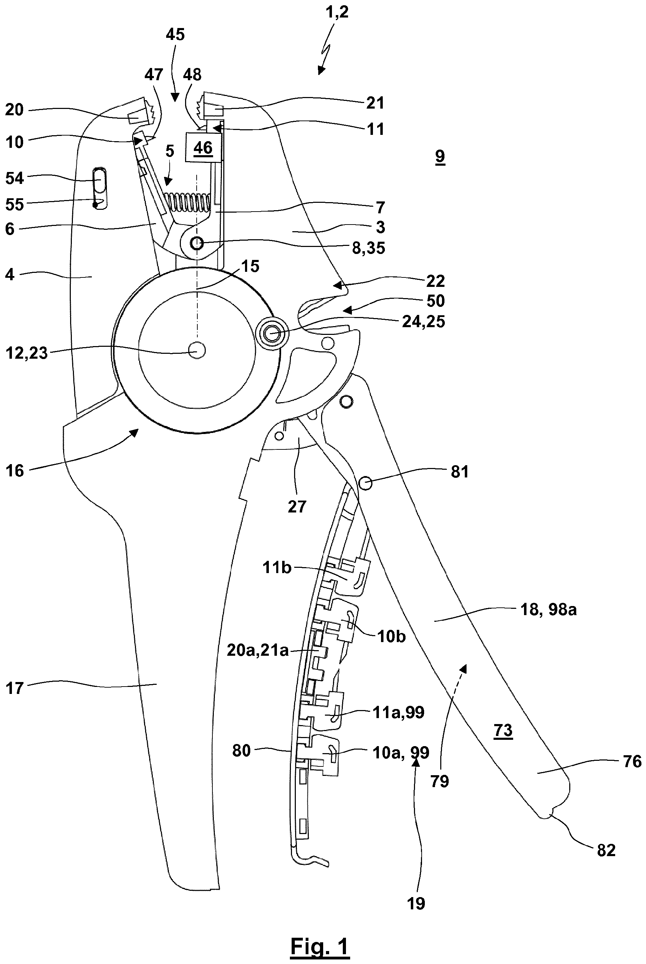

In den Fig. ist ein Abisolierwerkzeug 1 in Form einer handbetätigten Abisolierzange 2 dargestellt, ohne dass die Erfindung auf eine handbetätigte Abisolierzange 2 beschränkt sein soll. Die Abisolierzange 2 verfügt über zwei Zangenbacken 3, 4. Zwischen den beiden Zangenbacken 3, 4 ist eine Abisoliereinheit 5 aufgenommen, welche mit zwei Abisolierbacken 6, 7 gebildet ist. Die Abisolierbacken 6, 7 sind in einem Endbereich über ein Gelenk 8 verschwenkbar in einer parallel zur Zeichenebene gemäß **Fig. 1** orientierten Schwenkebene 9 verschwenkbar miteinander verbunden. Die Isolierbacken 6, 7 tragen in ihren freien Endbereichen jeweils ein Schneidelement 10, 11. Die Zangenbacken 3, 4 sind über ein Gelenk 12 in der Schwenkebene 9 verschwenkbar miteinander verbunden. Eine Verschwenkung der Zangenbacken 3, 4 aufeinander zu geht infolge eines Kontaktes über Kontaktflächen 13, 14 der Zangenbacken 3, 4 mit den Abisolierbacken 6, 7 und/oder den Schneidelementen 10, 11 einher mit einer Verschwenkung der Abisolierbacken 6, 7. Der Schwenkwinkel der Zangenbacken 3, 4 ist dabei kleiner als der Schwenkwinkel der Abisolierbacken 6, 7, da der Abstand der Kontaktflächen 13, 14 von dem Gelenk 12 größer ist als der Abstand der Kontaktflächen13, 14 von dem Gelenk 8. Darüber hinaus ist die Abisoliereinheit 5 mit den Abisolierbacken 6, 7 ohne Veränderung des Schwenkwinkels in Richtung einer Abisolierachse 15 relativ verschieblich, was durch Ausbildung eines Gleitkontakts im Bereich der Kontaktflächen 13, 14 ermöglicht wird. Hierbei bildet die gemeinsame Verschwenkung der Zangenbacken 3, 4 einerseits und der Abisolierbacken 6, 7 andererseits aufeinander zu einen Schneid- und/oder Klemmhub, während die Bewegung der Abisoliereinheit 5 entlang der Abisolierachse 15 ohne Veränderung des Schwenkwinkels einen Abisolierhub bildet.

Ein Antrieb 16 erzeugt sowohl den Schneidhub als auch den Abisolierhub. Für das dargestellte Ausführungsbeispiel ist der Antrieb 16 mit zwei Handhebeln 17, 18 sowie einer zwischen die Handhebel 17, 18 und die Zangenbacken 3, 4 und die Abisoliereinheit 5 zwischengeordneten getrieblichen Verbindung gebildet. Die getriebliche Verbindung ermöglicht für einen Arbeitshub der Handhebel 17, 18 mit Verschwenkung der Handhebel 17, 18 aufeinander zu nacheinander den Schneidhub und den Abisolierhub.

Der Handhebel 18 bildet eine Vorratseinrichtung 19 aus, welche der Bevorratung von weiteren Paaren von Schneidelementen 10a, 11a; 10b, 11b dient. Die Schneidelemente 10a, 11a; 10b, 11b können ausgetauscht werden gegen die mit den Abisolierbacken 6, 7 montierten Schneidelemente 10, 11. Für das dargestellte Ausführungsbeispiel bevorratet die Vorratseinrichtung 19 auch Klemmbacken 20a, 20b; 21a, 21b, welche gegen Klemmbacken 20, 21 ausgetauscht werden können, die vorzugsweise elastisch ausgebildet sind, im außenliegenden Endbereich in Nuten der Zangenbacken 3, 4 einsetzbar sind und das in die Abisolierzange 2 eingelegte Kabel halten und fixieren. Während die Klemmbacken 20, 21 in dem mit den Zangenbacken 3, 4 montierten Zustand eine verhältnismäßig große Erstreckung vertikal zur Zeichenebene gemäß Fig. 1 besitzen, ist deren Erstreckung in Richtung der Längsachse des eingelegten Kabels verhältnismäßig klein. In der Vorratseinrichtung 19 können die Klemmbacken 20, 21 platzsparend ohne Erfordernis der Vergrößerung der Erstreckung des Handhebels 18 vertikal zur Zeichenebene bevorratet werden, wenn die Klemmbacken 20, 21 mit ihrer Erstreckung in Richtung der Längsachse des Kabels (für in die Zangenbacken 3, 4 montierten Klemmbacken 20, 21) in Richtung der Dicke des Handhebels 18 (also vertikal zur Zeichenebene gemäß Fig. 1) in der Vorratseinrichtung 19 bevorratet werden.

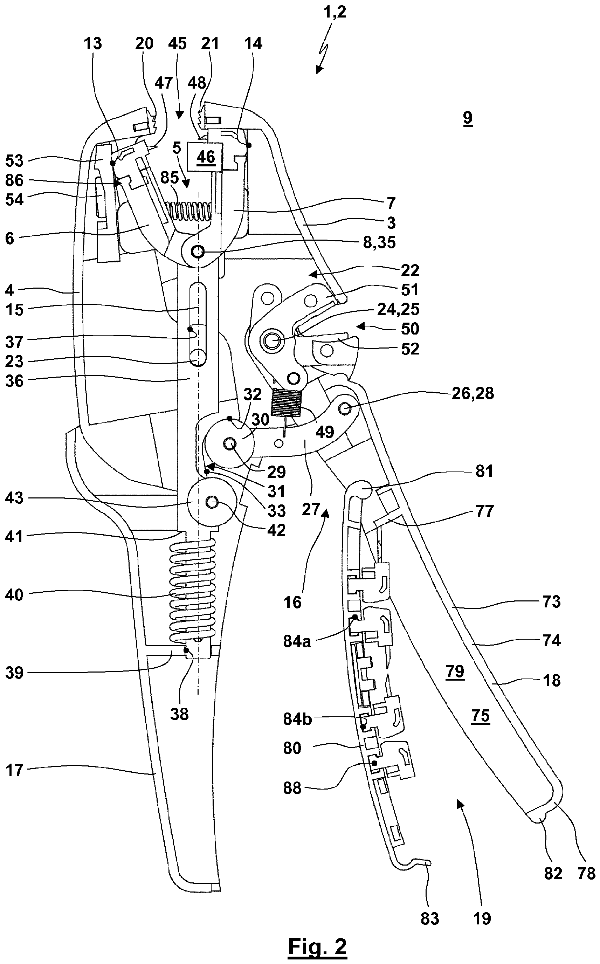

Der Aufbau und die Kinematik der Abisolierzange 2 und der getrieblichen Verbindung des Antriebs 16 sind in der geschnittenen Darstellung gemäß **Fig.2** zu erkennen: Der Handhebel 17 und die Zangenbacke 3 sind starr miteinander verbunden. Mit der Zangenbacke 3 und dem Handhebel 17 ist somit ein starres Stangenteil 22 gebildet. Die Zangenbacke 4 ist über das Gelenk 12 drehbar in der Schwenkebene 9 an dem starren Stangenteil 22 gelagert, was mittels eines an dem starren Stangenteil 22 gehaltenen Lagerbolzens 23 erfolgt. Der Handhebel 18 ist über ein Gelenk 24 verschwenkbar in der Schwenkebene 9 an dem starren Zangenteil 22 gelagert, was hier durch einen an dem starren Zangenteil 22 befestigten Lagerbolzen 25 erfolgt. An dem Handhebel 18 ist über ein Gelenk 26 ein Endbereich eines Druckhebels 27 angelenkt, was hier durch einen an dem Handhebel 18 befestigten Lagerbolzen 28 erfolgt. In dem anderen Endbereich des Druckhebels 27 ist an diesem über ein Lager 29 verdrehbar in der Schwenkebene 9 eine Rolle 30 gelagert. Die Rolle 30 wälzt an einer Führungskontur 31 ab, welche einen (insbesondere ungefähr viertelkreisförmigen) Führungskonturabschnitt 32, einen (insbesondere ungefähr koaxial zur Abisolierachse 15 orientierten geradlinigen) Führungskonturabschnitt 33 sowie einen (insbesondere ungefähr parallel zur Längsachse des Druckhebels 27 orientierten) Führungskonturabschnitt 34 besitzt.

Ein Lagerbolzen 35, mit welchem das Gelenk 8 der Abisoliereinheit 5 gebildet ist, dient auch der gelenkigen Verbindung der Abisoliereinheit 5 mit einer Zuglasche 36. Die Zuglasche 36 verfügt lediglich über einen translatorischen Freiheitsgrad entlang der Abisolierachse 15. Dieser wird gewährleistet durch eine Führung der Zuglasche 36 einerseits durch ein Langloch 37 der Zuglasche 36, in welchem weitestgehend spielfrei quer zur Abisolierachse 15 der Lagerbolzen 23 geführt ist, sowie Durchtritt des dem Gelenk 8 abgewandten Endbereichs der Zuglasche 36 durch eine führende Ausnehmung 38 einer quer zur Abisolierachse 15 orientierten Wandung 39 des Handhebels 17. Der Abisolierhub mit einer Bewegung der Zuglasche 36 entlang der Abisolierachse 15 erfolgt unter Beaufschlagung einer Feder 40. Für das dargestellte Ausführungsbeispiel ist die Feder 40 als wendelartig gewundene Druckfeder ausgebildet, welche die Zuglasche 36 mit mehreren Gängen umschlingt und deren einer Federfußpunkt an der Wandung 39 abgestützt ist, während der andere Federfußpunkt an der Zuglasche 36 abgestützt ist, beispielsweise im Bereich eines Absatzes 41 der Zuglasche 36. An der Zuglasche 36 ist verdrehbar in der Schwenkebene 9 über ein Lager 42 eine Rolle 43 gelagert.

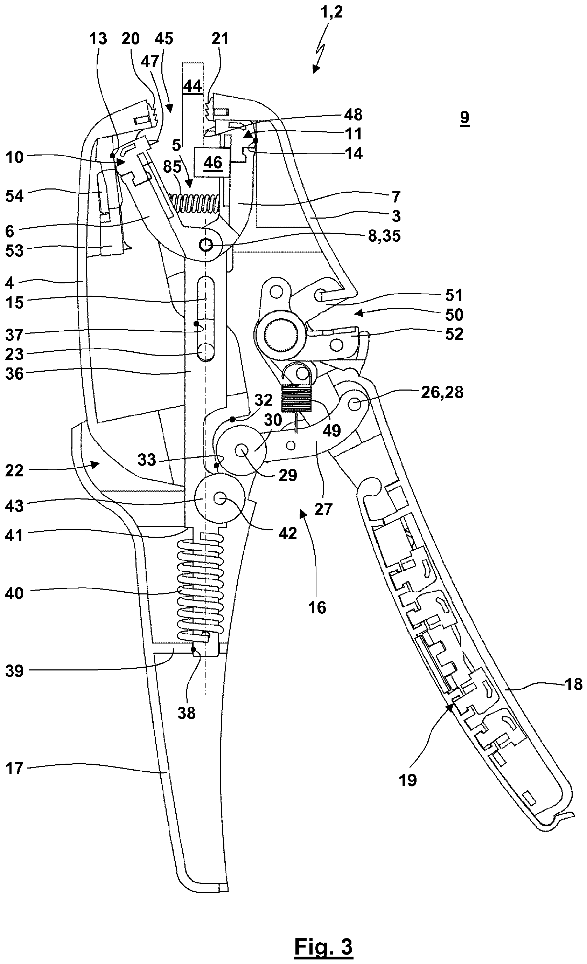

Im Folgenden wird ein Arbeitshub der Abisolierzange 2 anhand der Fig. 3 bis 6 erläutert:

**Fig. 3** zeigt die Abisolierzange 2 in einer Einführstellung. Ohne Applikation von Handkräften auf die Handhebel 17, 18 nehmen sowohl die Handhebel 17, 18 als auch die Zangenbacken 3, 4 als auch die Abisolierbacken 6, 7 die aus Fig. 3 ersichtliche Öffnungsstellung ein. Dies erfolgt durch eine auch in der Öffnungsstellung vorgespannte Feder 85, welche die Abisolierbacken 6, 7 und damit auch die Zangenbacken 3, 4 und die Handhebel 17, 18 in Öffnungsrichtung beaufschlagt. In dieser Einführstellung kann ein Kabel 44 in ein von den Zangenbacken 3, 4 und den Abisolierbacken 6, 7 mit daran befestigten Schneidelementen 10, 11 gebildetes Maul 45 der Abisolierzange 2 eingelegt werden. Hierbei trägt die Abisolierbacke 7 und/oder das Schneidelement 11 optional einen Abstandshalter 46, an welchen eine Stirnseite des Kabels 44 mit dem Einlegen in das Maul 45 zur Anlage gebracht wird, womit sich ein definierter Abstand von Messern 47, 48 der Schneidelemente 10, 11 von der Stirnseite des Kabels 44 ergibt.

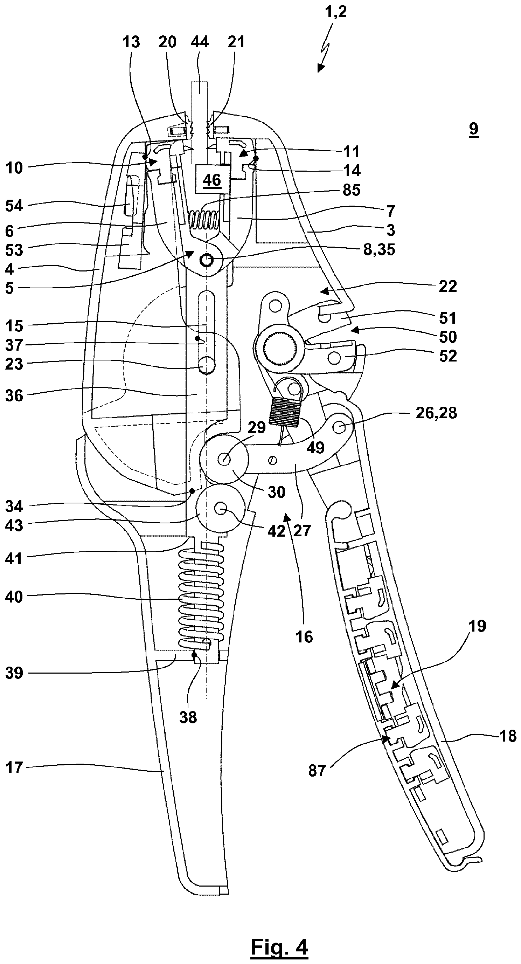

Ausgehend von dieser Einführstellung gemäß Fig. 3 wird ein Klemm- und Schneidhub ausgeführt durch Bewegung der Handhebel 17, 18 aufeinander zu, bis die Schneidstellung gemäß **Fig. 4** erreicht ist. Die Bewegung des Handhebels 18 in Richtung des Handhebels 17 während des Schneid- und Klemmhubs hat zur Folge, dass auch der Druckhebel in Richtung der Führungskontur 31 bewegt wird. Während im Anfangsbereich des Führungskonturabschnitts 32 die Rolle 30 noch an der Führungskontur 31 abwälzen kann, ohne signifikante Kräfte auf die Zangenbacke 4 auszuüben, ändert sich die Neigung des Führungskonturabschnitts 32 mit zunehmender wälzender Bewegung der Rolle 30 entlang des Führungsabschnitts, womit eine sich vergrößernde Kraft von dem Druckhebel 27 auf die Zangenbacke 4 aufgebracht wird, so dass zunehmend eine Kraft auf die Zangenbacke 4 wirkt, welche auf eine Verschwenkung der Zangenbacke 4 in Richtung der Zangenbacke 3 gerichtet ist. Nach Schließung des Mauls wirken der durch den Druckhebel 27 und die Rolle 30 an dem Führungskonturabschnitt 32 der Führungskontur 31 erzeugten Betätigungskraft einerseits die an den Klemmbacken 20, 21 hervorgerufene Klemmkraft für die Mantelfläche des Kabels 44 und andererseits die Schneid- und Anpresskraft der Messer 47, 48 der Abisoliereinheit 5 in einem Kräftegleichgewicht entgegen. Mit der Schneidstellung gemäß Fig. 4 erreicht die Rolle den Übergang zwischen den Führungskonturabschnitten 32, 33. In dieser Schneidstellung gemäß Fig. 4 liegt die Rolle 30 des Druckhebels 27 an der Rolle 43 der Zuglasche 36 an.

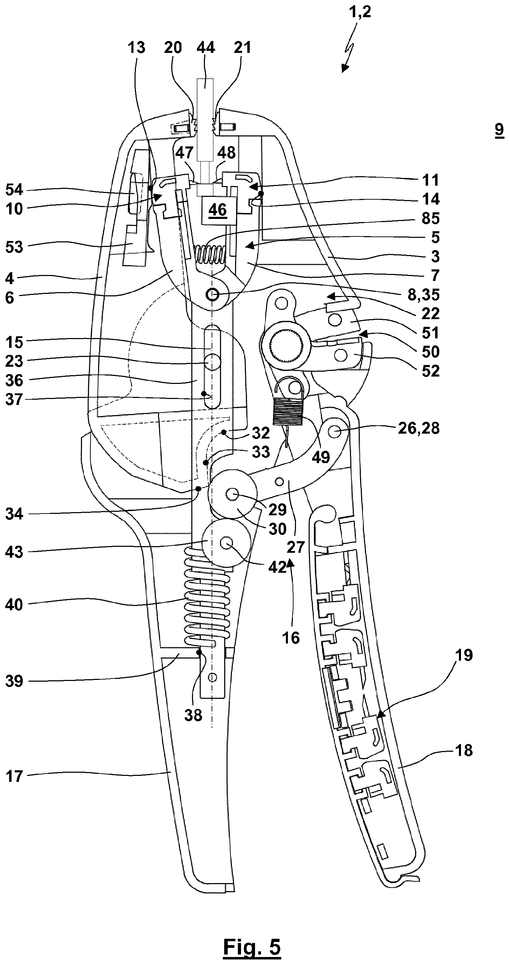

In der Schneidstellung gemäß Fig. 4 bildet die Verbindungsachse zwischen dem Gelenk 26 und dem Lager 29 des Druckhebels 27 einen Winkel zu der Abisolierachse 15 aus, welcher kleiner als 90° ist. Wird in einem anschließenden Abisolierhub zur Herbeiführung der abisolierten Stellung gemäß **Fig. 5** die auf den Handhebel 18 aufgebrachte Betätigungskraft weiter erhöht, führt die erläuterte Ausrichtung des Druckhebels 27 dazu, dass die in dem Druckhebel 27 wirkende Längskraft eine Kraftkomponente erzeugt, welche parallel zur Abisolierachse 15 orientiert ist und von der Rolle 30 über einen wälzenden Kontakt auf die Rolle 43 und damit auf die Zuglasche 36 übertragen wird. Diese Kraftkomponente bewirkt eine Verschiebung der Rolle 43 und der Zuglasche 36 unter zunehmender Beaufschlagung der Feder 40 entlang der Abisolierachse 15. Infolge der Ankopplung der Abisoliereinheit 5 im Bereich des Gelenks 8 geht dies einher mit einer Gleitbewegung der Abisoliereinheit 5 gegenüber den Zangenbacken 3, 4. Des Weiteren geht mit diesem Abisolierhub eine wälzende Bewegung der Rolle 30 entlang des Führungskonturabschnitts 33 einher, was wiederum eine zunehmende Verschwenkung des Druckhebels 27 mit einer Verkleinerung des Winkels der Verbindungsachse des Gelenks 26 und des Lagers 29 gegenüber der Abisolierachse zur Folge hat. Die Kraftverhältnisse für diesen Abisolierhub werden beeinflusst durch die Vorspannung und Steifigkeit der Feder 40 sowie die Reibverhältnisse für die gleitende Bewegung der Abisoliereinheit 5 gegenüber den Zangenbacken 3, 4 im Bereich der Kontaktflächen 13, 14. Zusätzlich kann zwecks Beeinflussung der Kraftverhältnisse auf den Druckhebel 27 eine weitere Feder 49 einwirken. Der erläuterte Abisolierhub hat zur Folge, dass für grundsätzlich im Bereich der Klemmbacken 20, 21 fixiertes Kabel 44 nach Durchtrennung der Isolierung durch die Messer 47, 48 in dem Schneidhub die Messer 47, 48 in geschlossenem Zustand relativ zu dem Kabel 44 bewegt werden, womit der endseitige freigeschnittene Axialbereich der Isolierung von dem Leiter heruntergezogen wird. Der maximale Abisolierhub ist vorgegeben durch die Länge des Führungskonturabschnitts 33. Fig. 5 zeigt die abisolierte Stellung. Für diese hat die Rolle 30 den Übergangsbereich zwischen den Führungskonturabschnitten 33, 34 erreicht.

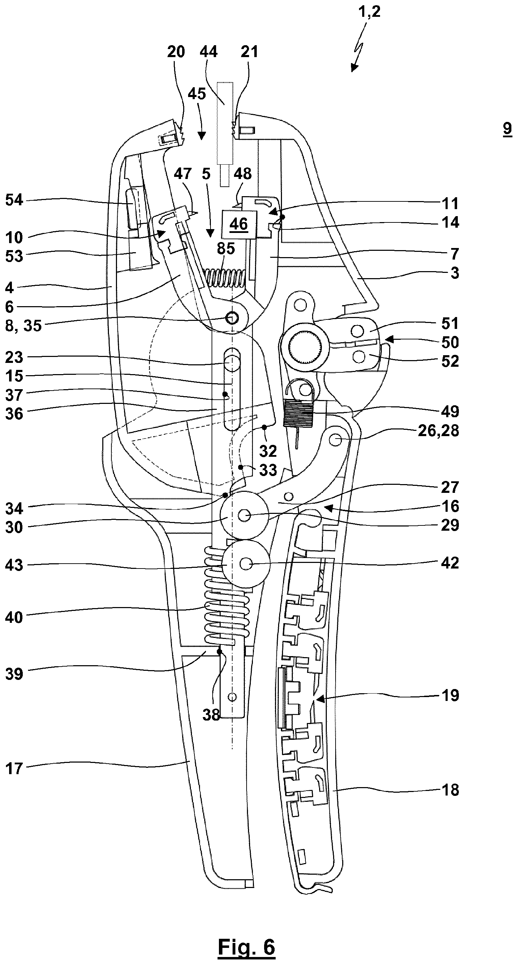

Mit weiterer Schließung der Handhebel 17, 18 kann dann die Rolle 30 an dem Führungskonturabschnitt 34 abwälzen, wobei dann vorzugsweise der Führungskonturabschnitt 34 ungefähr parallel zur Verbindungsachse des Gelenks 26 und des Lagers 29 orientiert ist. Dies hat einerseits zur Folge, dass ohne weitere signifikante Applikation von Handkräften auf die Handhebel 17, 18 die Handhebel 17, 18 weiter geschlossen werden können. Andererseits bildet die Rolle 30 dann kein Widerlager für die Zangenbacke 4 mehr, so dass die Feder 40 die Abisolierbacken 6, 7 und die Zangenbacken 3, 4 wieder in die Öffnungsstellung überführen kann. Hiermit ist eine Entnahmestellung gemäß **Fig. 6** erreicht, in welcher das abisolierte Kabel 44 aus dem nun wieder geöffneten Maul 45 entnommen werden kann und der Axialbereich der Isolierung aus dem Maul 45 herausfällt. Die Entnahmestellung gemäß Fig. 6 ist gleichzeitig eine Wechselstellung, auf welche im Folgenden noch näher eingegangen wird. Mit Erreichen der Entnahme- und Wechselstellung gemäß Fig. 6 ist der Arbeitshub der Abisolierzange 2 beendet.

Mit Beseitigung der auf die Handhebel 17, 18 aufgebrachten Handkräfte kehren (veranlasst durch die Federn 40, 39) die Handhebel 17, 18 wieder in die geöffnete Stellung zurück, womit wieder die Einführstellung gemäß Fig. 3 herbeigeführt ist und ein weiteres Kabel 44 mit der Abisolierzange 2 abisoliert werden kann.

Optional ist die Abisolierzange 2 mit einem weiteren Werkzeug, nämlich einer Schneideinrichtung 50, ausgestattet, welche ebenfalls über die Betätigung der Handhebel 17, 18 betätigt wird und welche über zwei Messer 51, 52 verfügt, mittels welchen mit Schließung der Handhebel 17, 18 ein in die Schneideinrichtung 50 eingelegtes Kabel vollständig durchtrennt werden kann (vgl. zur Ausgestaltung der Schneideinrichtung und zu deren getrieblicher Verbindung mit den Handhebeln auch den eingangs aufgeführten Stand der Technik).

Die Kontaktfläche 14 für eine Abisolierbacke 7 ist unmittelbar von der Zangenbacke 3 ausgebildet. Hingegen ist die Kontaktfläche 13 für die andere Abisolierbacke 6 von einem Abstützelement 53 ausgebildet, welches über ein Einstellelement 54 derart verlagerbar ist, dass je nach Position des Abstützelements 53 eine Veränderung des Schwenkwinkels der Abisolierbacken 6, 7 gegenüber dem Schwenkwinkel der Zangenbacken 3, 4 möglich ist. Somit kann über das Einstellelement 54 und die Vorgabe der Position des Abstützelements 53 vorgegeben werden, wie tief in der Schneidstellung die Messer 47, 48 in das Kabel 44 eindringen, um unterschiedlichen Dicken der Isolierung Rechnung tragen zu können. Für das dargestellte Ausführungsbeispiel erstreckt sich das Einstellelement 54 durch einen Führungsschlitz 55 der Zangenbacke 4, so dass diese von außen durch den Benutzer entlang des Führungsschlitzes 55 verschoben werden kann. Das Einstellelement 54 betätigt über gegenüber dem Führungsschlitz 55 geneigte Kontaktflächen in der Art eine Doppelkeil-Verbindung das Abstützelement 53.

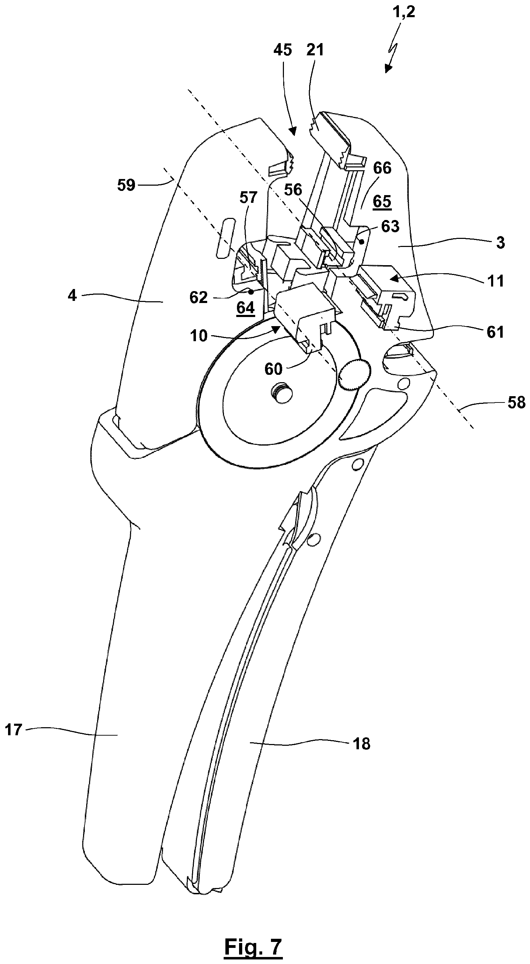

**Fig. 7** zeigt die Abisolierzange 2 in einer räumlichen Ansicht in der Entnahme- und Wechselstellung. Hier ist zu erkennen, dass die von dem Gelenk 8 weg weisenden Stirnseiten der Abisolierbacken 6, 7 jeweils mit Montagenuten 56, 57 ausgestattet sind. Die Längsachsen der Montagenuten 56, 57 bilden jeweils Montageachsen 58, 59. In Richtung der Montageachsen 58, 59 sind Montageelemente 60, 61 der Schneidelemente 10, 11 in die Montagenuten 56, 57 der Abisolierbacken 6, 7 einsetzbar. Die Montagenuten 56, 57 besitzen im Bereich des Boden Erweiterungen, womit Hinterschneidungen gebildet sind. Entsprechend sind die Montageelemente 60, 61 als Vorsprünge mit endseitigen Erweiterungen ausgebildet, welche in die Hinterschneidungen der Montagenuten 56, 57 eingreifen, womit ein Formschluss zur Aufnahme jedweder Kräfte in der Schwenkebene 9 gebildet ist. Eine Sicherung der Schneidelemente 10, 11 gegenüber den Abisolierbacken 6, 7 erfolgt grundsätzlich durch die Reibung zwischen den Montagenuten 56, 57 und den Montageelementen 60, 61. Vorzugsweise besitzen die Montagenuten 56, 57 sowie die Montageelemente 60, 61 jeweils einen in grober Näherung T-förmigen Querschnitt. Das formschlüssige Eingreifen des Montageelements 60, 61 in die Montagenut 56, 57 kann auch als eine Art Schwalbenschwanz-Verbindung 86 ausgebildet sein.

Das Schneidelement 10, 11 ist mit seinem Montageelement 60, 61 lediglich in der Wechselstellung gemäß Fig. 7 in die Montagenut 56, 57 einsetzbar, da in der Wechselstellung die Montagenut 56, 57 durch eine Ausnehmung oder einen Einschnitt 62, 63 einer parallel zur Schwenkebene 9 orientierten Seitenwandung 64, 65 der Zangenbacke 3, 4 zugänglich ist. Verlässt die Abisolierzange 2 die Wechselstellung gemäß Fig. 7, werden die Abisolierbacken 6, 7 mit den daran gehaltenen Schneidelementen 10, 11 gegenüber der Seitenwandung 64, 65 nach vorne geschoben, womit die Schneidelemente 10, 11 nicht mehr zugänglich sind. Vielmehr sind abseits der Wechselstellung die Schneidelemente 10, 11 zwischen den Seitenwandungen 64, 65 der Zangenbacken 3, 4 gefangen, so dass sich diese (abgesehen von einem etwaigen Spiel) außerhalb der Wechselstellung nicht unerwünscht entlang der Montageachsen 58, 59 bewegen können. Wie aus Fig. 7 ersichtlich ist, kann lediglich eine Seitenwandung einer Zangenbacke mit der Ausnehmung 62, 63 ausgestattet sein, durch welche dann die Montage und Demontage erfolgt, während die andere Seitenwandung derselben Zangenbacke nicht mit einer derartigen Ausnehmung ausgestattet ist. Die Seitenwandung 64, 65 bildet somit abseits der Wechselstellung ein Sicherungselement 66, welches das Schneidelement in Richtung der Montageachse 58, 59 blockiert.

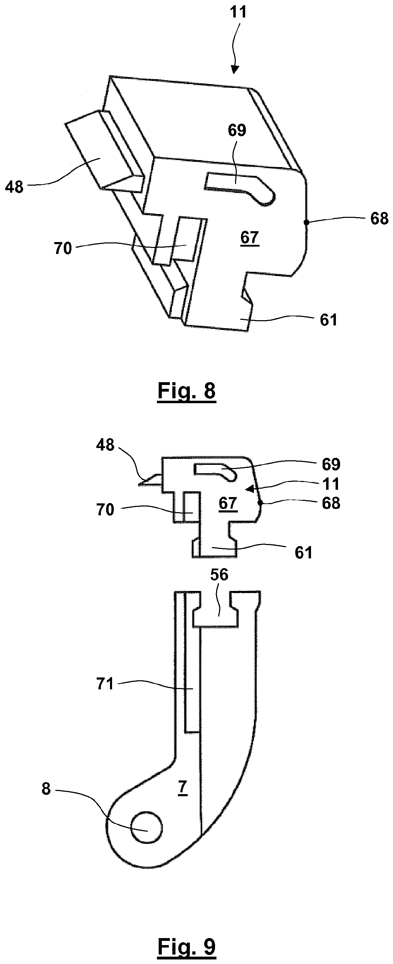

**Fig. 8** zeigt in einer räumlichen Darstellung beispielhaft das Schneidelement 11 (wobei für das andere Schneidelement 10 das Entsprechende gilt). Dieses ist beispielhaft mit einem Messer 48 mit geradlinig ausgebildeter Schneide gebildet, wobei durchaus abweichende Schneiden, beispielsweise mit mindestens einer konkaven Schneide oder auch zwei hintereinander angeordnete Messerblättern mit jeweils geradlinigen Schneiden, welche "V"-förmig angeordnet sind, oder auch lamellenartige Messer Einsatz finden können. Das Messer 48 ist umspritzt mit einem Haltekörper 67 aus Kunststoff. Der Haltekörper 67 bildet auf der dem Messer 48 abgewandten Seite eine Kontaktfläche 68 aus, mit welcher das Schneidelement 11 an einer zugeordneten Kontaktfläche 14 der Zangenbacke 3 abgestützt werden kann. Zu erkennen ist des Weiteren in Fig. 8 das mit einem Vorsprung mit T-förmiger Erweiterung im Endbereich ausgebildete Montageelement 61. Weiterhin können im Seitenbereich des Haltekörpers 67 Handhabungsflächen 69 vorgesehen sein, welche die manuelle Handhabung des Schneidelements 11 vereinfachen. Beispielsweise können die Handhabungsflächen 69 aufgeraut sein, um ein Greifen mit der Hand zu vereinfachen. Möglich ist, dass im Seitenbereich des Haltekörpers 67 eine Führungsnut 70 vorhanden ist, welche in Richtung der zugeordneten Abisolierbacke 7 offen ist.

**Fig. 9** zeigt eine Abisolierbacke 7 mit zugeordnetem Schneidelement 11 in demontiertem Zustand. Die Montageachse 58 ist hierbei vertikal zur Zeichenebene orientiert. Auch die Abisolierbacke 7 verfügt über eine Führungsnut 71. Mit Montage des Schneidelements 11 an der Abisolierbacke 7 ergänzen sich die Führungsnuten 70, 71 zu einer durchgehenden geradlinigen Führungsnut. Diese gemeinsam gebildete Führungsnut dient der Aufnahme des Abstandshalters 46, welcher auf der zu dem Maul 45 orientierten Seite die Abisolierbacke U-förmig umgreift, wobei endseitige Abwinklungen der Vertikalschenkel des U in die Führungsnuten 70, 71 eintreten. Der Abstandshalter 46 ist zur Veränderung der Länge des Axialbereichs der Isolierung, welcher zu entfernen ist, entlang der Führungsnuten 70, 71 verschiebbar. Ergänzend kann eine Rastierung oder anderweitige Fixierung einer eingestellten Position des Abstandshalters vorgesehen sein, welche hier nicht dargestellt ist (vgl. diesbezüglich bspw. DE 20 2008 014 111 U1). Möglich ist, dass der Abstandshalter 46 in demontiertem Zustand auf die Führungsnut 70 des Schneidelements 11 oder die Führungsnut 71 der Abisolierbacke 7 aufgesteckt wird und dann die Montage des Schneidelements 11 mit der Abisolierbacke 7 erfolgt, womit dann der Abstandshalter 46 in der mit den Führungsnuten 70, 71 gebildeten gemeinsamen Führungsnut verliersicher gefangen ist. Es versteht sich, dass die Abisolierbacke 6 und das Schneidelement 10 entsprechend ausgebildet sind, u. U. aber auch mit einer spiegelverkehrten Ausgestaltung. Die Schneidelemente 10, 11 für die beiden Abisolierbacken 6, 7 können aber auch identisch ausgebildet sein, wobei diese dann in umgekehrter Orientierung mit den unterschiedlichen Abisolierbacken 6, 7 montiert werden können.

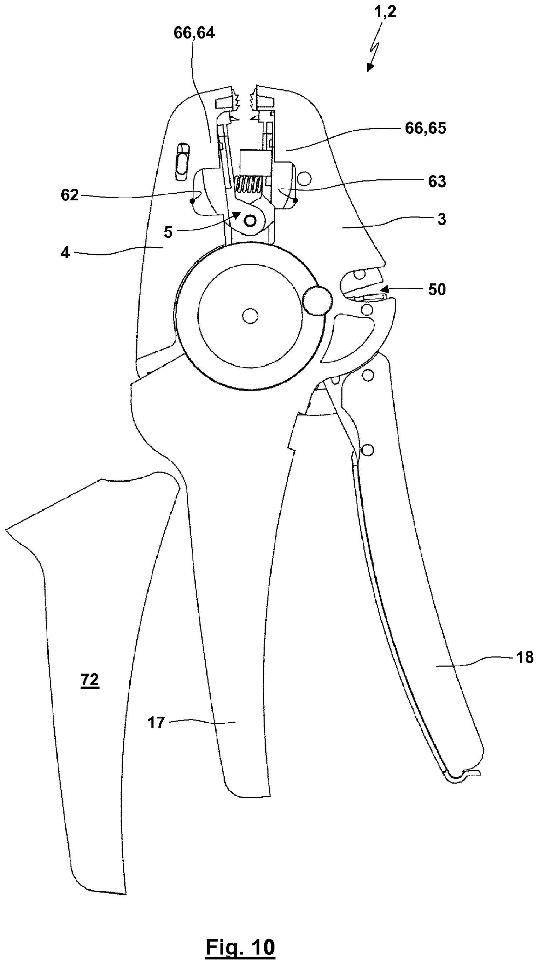

Wie aus **Fig. 10** ersichtlich ist, kann zumindest einer der Handhebel 17 mit einer Ummantelung 72 gebildet sein, welche auf einen Grundkörper des Handhebels 17 aufsteckbar, aufklebbar oder anderweitig mit diesem verbindbar ist. Über die Ummantelung 72 kann eine Vorgabe einer Elastizität erfolgen, um ein weiches Greifgefühl herbeizuführen. Möglich ist, dass mittels der Ummantelung 72, beispielsweise durch Form- und/oder Farbgebung, eine Individualisierung der Abisolierzange 2 für unterschiedliche Kunden erfolgt. Möglich ist darüber hinaus, dass über die Ummantelung 72 eine Anpassung an unterschiedliche Größen der Hände des Benutzers der Abisolierzange 2 erfolgt.

Wie insbesondere aus den Fig. 1 und 2 ersichtlich ist, ist der die Vorratseinrichtung 19 ausbildende Handhebel 18, bei welchem es sich insbesondere um den beweglichen Handhebel handelt, mit einem Grundkörper 73 gebildet, welcher der Aufbringung und Übertragung der Betätigungskräfte dient und somit über eine entsprechende Steifigkeit verfügt. Im Bereich der Vorratseinrichtung 19 ist der Grundkörper 73 im Querschnitt in grober Näherung U-förmig ausgebildet, wobei die Öffnung des U in Richtung des anderen Handhebels 17 orientiert ist. Der U-förmige Querschnitt des Grundkörpers 73 ist hier mit einem Grundschenkel 74 sowie zwei ungefähr parallel orientierten Seitenschenkeln 75, 76 gebildet. Von dem Grundköper 73 ist ein in Richtung des Handhebels 17 offener Innenraum 79 gebildet. In Richtung der Längsachse des Handhebels 18 ist der Innenraum 79 des Grundkörpers 73 begrenzt einerseits durch eine Wandung 77 sowie andererseits durch eine endseitige Wandung 78 des Handhebels 18. Der Innenraum 79 kann mittels eines Deckels 80 verschlossen werden. Der Deckel 80 ist in dem dem Zangenkopf der Abisolierzange 2 zugewandten Endbereich über ein Schwenklager 81 außerhalb des Innenraums 79 an dem Grundköper 73 angelenkt. Fig. 1 und 2 zeigen unterschiedliche Schwenkstellungen des Deckels 80, während Fig. 3 eine Schließstellung des Deckels 80 zeigt. Der Grundkörper 73 bildet im Bereich der in dem freien Endbereich des Handhebels 18 angeordneten Wandung 78 eine Rastnase 82 aus. In der Schließstellung des Deckels 80 gemäß Fig. 3 verrastet eine elastische Abwinklung 83 des Deckels 80 mit der Rastnase 82, womit die Schließstellung des Deckels 80 gegenüber einem unbeabsichtigten Öffnen gesichert ist. Auf der Innenseite des Deckels 80 sind Montagenuten 84 vorgesehen, welche vertikal zur Schwenkebene 9 und zu der Bewegungsebene der Handhebel 17, 18 sowie der Schwenkebene des Deckels 80 orientiert sind. In die Montagenuten 84 können für eine Auswechslung bevorratete Schneidelemente 10, 11 eingesetzt werden. Während die Schneidelemente 10, 11 für aufgeklappten Deckel 80 ohne weitere Maßnahmen aus den Montagenuten 84 ausgeschoben werden können, ist ein Austritt der Schneidelemente 10, 11 für geschlossene Deckel 80 nicht möglich, da der Austritt der Schneidelemente 10, 11 durch die die Seitenschenkel 75, 76 bildenden Wandungen des Grundkörpers 73 blockiert ist. Die Montagenuten 84 sind entsprechend den Montagenuten 56, 57 ausgebildet, so dass die Montageelemente 60, 61 der Schneidelemente 10, 11 genutzt werden können. Die Montagenuten 84 geben eine Montageachse 88 vor, welche quer zur Schwenkebene 9, in welcher die Handhebel 17, 18 verschwenkt werden, und senkrecht zur Zeichenebene gemäß Fig. 1 orientiert sind. In der Vorratseinrichtung 19 sind die Schneidelemente ebenfalls über Schwalbenschwanz-Verbindungen 87 gehalten. Ergänzend möglich ist die Bevorratung von Klemmbacken 20, 21 in der Vorratseinrichtung 19, wozu der Deckel 80 auf der Innenseite ebenfalls entsprechende Aufnahmen oder Montagenuten besitzen kann.

Für das dargestellte Ausführungsbeispiel sind die Abisolierbacken 6, 7 mit den Montagenuten 56, 57 ausgestattet, während die Schneidelemente 10, 11 mit den Montageelementen 60, 61 ausgestattet sind. Ebenfalls möglich ist, dass die Abisolierbacken 6, 7 die Montageelemente 60, 61 besitzen, während die Montagenuten 56, 57 an den Schneidelementen 10, 11 vorgesehen sind.

Im Rahmen der vorliegenden Erfindung umfasst eine "Wechselstellung", in welcher ausschließlich die Montage und Demontage der Schneidelemente 10, 11 möglich ist, sowohl eine diskrete Stellung als auch einen Stellungsbereich. Möglich ist auch, dass mehrere Wechselstellungen vorhanden sind.

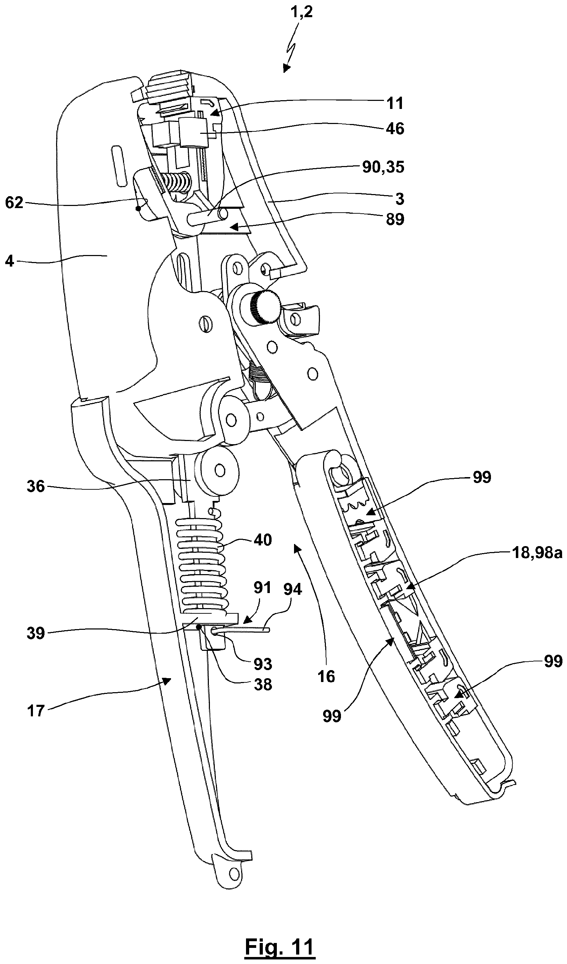

**Fig. 11** zeigt eine andere Ausführungsform einer Abisolierzange 2, welche bis auf Weiteres grundsätzlich entsprechend der Abisolierzange gemäß den Fig. 1 bis 10 ausgebildet sein kann. In Fig. 11 ist die Abisolierzange 2 teilgeschnitten dargestellt, wobei Teile der Handhebel 17, 18 sowie der Zangenbacke 3 weggeschnitten sind. Für dieses Ausführungsbeispiel kann die Betriebsstellung der Abisolierzange 2 nicht ausschließlich über den mit den Handhebeln 17, 18 gebildeten Antrieb 16, welcher der Aufbringung der Betätigungskräfte für die Bearbeitung des Werkstücks, insbesondere für das Einschneiden der Isolierung in dem Schneidhub und das Abisolieren in dem Abisolierhub, zuständig ist, verändert werden. Vielmehr ist eine manuelle Veränderung einer Betriebsstellung und insbesondere die Herbeiführung einer Wechselstellung auch über einen weiteren Antrieb 89 manuell möglich, welcher ohne Veränderung der Handhebel 17, 18 betätigbar ist und nicht für die Bearbeitung des Werkstücks genutzt wird. Der weitere Antrieb 89 ist mit einem manuellen Betätigungsorgan 90 gebildet. Für das dargestellte Ausführungsbeispiel ist das Betätigungsorgan 90 mit dem Lagerbolzen 35 gebildet, welcher hier über einen nicht dargestellten Schlitz aus einem Gehäuse der Abisolierzange 2 herausgeführt oder frei von außen zugänglich ist. Möglich ist, dass das Betätigungsorgan 90 mit einem Schlitz in einem dem starren Zangenteil 22 zugeordneten Gehäuse entlang der Abisolierachse 15 geführt ist. Wird in der in Fig. 11 dargestellten Einführstellung der Abisolierzange 2 das Betätigungsorgan 90 manuell in Richtung der Abisolierachse 15 erschoben, führt dies zu einer Verschiebung der Zuglasche 36 entlang der Abisolierachse 15, wobei die manuell aufgebrachten Kräfte ausreichend sein müssen, um die Kraft der Feder 40 zu überwinden. Während die Zangenbacken 3, 4, der Druckhebel 27 und die Handhebel 17, 18 während dieser Betätigung des Antriebs 89 ihre Stellung beibehalten können, führt die Bewegung der Zuglasche 36 infolge der Kopplung über das Gelenk 8 auch zu einer Bewegung der Abisoliereinheit 5 entlang der Abisolierachse 15. Es kommt somit zu einer Relativverschiebung der Abisolierbacken 6, 7 und der daran montierten Schneidelemente 10, 11 gegenüber den Zangenbacken 3, 4, bis die Schneidelemente 10, 11 im Bereich der Ausnehmungen 62, 63 der Seitenwandungen 64, 65 der Zangenbacken 3, 4 angeordnet sind, womit eine Wechselstellung erreicht ist, in welcher die Schneidelemente 10, 11 entlang der Montageachse 58, 59 demontiert werden können und neue Schneidelemente 10a, 10b montiert werden können.

Möglich ist, dass zur Beibehaltung einer derart herbeigeführten Wechselstellung weiterhin das Betätigungsorgan 90 manuell beaufschlagt werden muss, damit die Feder 40 nicht eine Bewegung aus der Wechselstellung heraus verursacht. Möglich ist aber auch, dass in der derart herbeigeführten Wechselstellung eine Rast- oder Verriegelungseinrichtung 91 wirksam wird, welche die Wechselstellung sichert. Hierbei kann die Rast- oder Verriegelungseinrichtung 91 ein beliebiges Bauelement verrasten oder verriegeln, welches zur Herbeiführung der Wechselstellung bewegt wird. Findet eine Rasteinrichtung Einsatz, kann diese eine Rastkraft erzeugen, welche größer ist als die von der Feder 40 hervorgerufene Kraft. Die Überwindung der Rastkraft erfolgt dann, indem die Kraft der Feder 40 ergänzt wird durch manuell auf das Betätigungsorgan 90 aufgebrachten Lösekräfte, welche von der Wechselstellung weg gerichtet sind. Für den Fall, dass eine Verriegelungseinrichtung Einsatz findet, kann eine verriegelte Stellung verlassen werden durch manuelle Beseitigung eines Verriegelungselements.

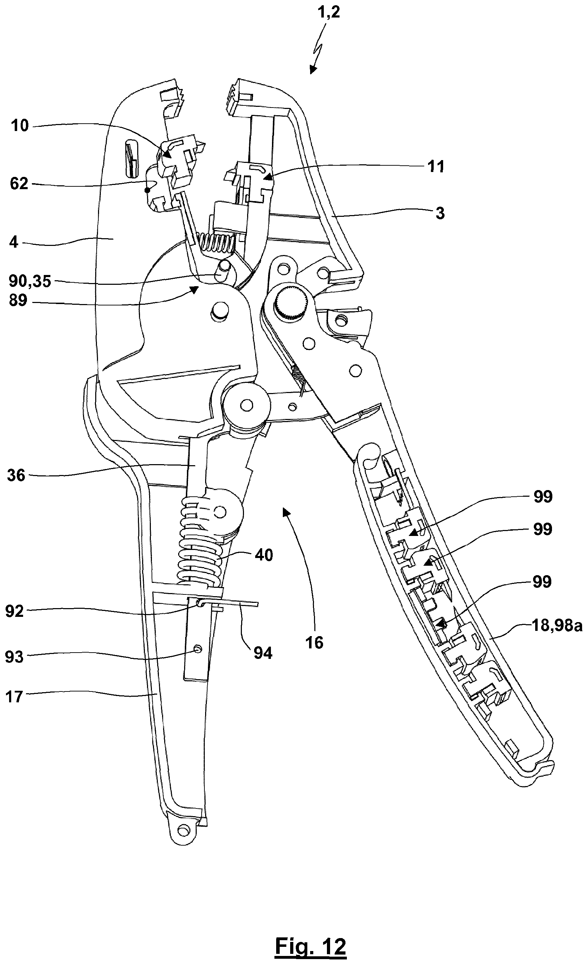

Die **Fig. 11** **und** **12** zeigen lediglich ein Ausführungsbeispiel einer Rast- oder Verriegelungseinrichtung 91, ohne dass die Erfindung auf dieser Ausführungsform eingeschränkt sein soll. Hier ist die Zuglasche 36 in dem Endbereich, welcher die Ausnehmung 38 der Wandung 39 des Handhebels 17 durchsetzt, mit zwei axial beabstandeten Bohrungen 92, 93 ausgestattet. Mittels eines in die Bohrungen 92, 93 einsetzbaren Verriegelungselements 94, hier ein Drahtbügel, können unterschiedliche axiale Positionen der Zuglasche 36 gesichert werden, wobei für das dargestellte Ausführungsbeispiel mit dem Einsetzen des Verriegelungselements 94 in die Bohrung 92 gemäß Fig. 12 eine formschlüssige Sicherung und damit Verriegelung der Wechselstellung möglich ist. Wie ebenfalls aus Fig. 12 ersichtlich ist, ist durch Betätigung des Antriebs 89 eine Entnahme der Schneidelemente 10, 11 auch in der Einführstellung der Zangenbacken 3, 4 und Handhebel 17, 18 möglich, so dass alternativ ein Auswechseln in der Einführstellung und in der Entnahmestellung möglich ist.

Möglich ist aber auch, dass das Auswechseln nur in einer durch den Antrieb 89 herbeigeführten Wechselstellung möglich ist, wobei dann auch eine Entnahmestellung gänzlich entfallen kann und die Entnahme in der Einführstellung erfolgen kann.

Erfindungsgemäß findet eine von zumindest einem der Antriebe 16, 89 bewegungsgesteuerte Freigabe der Schneidelemente 10, 11 Einsatz.

Möglich ist, dass in der Vorratseinrichtung 19 auch für eine Auswechslung bestimmte Schneidelemente 51, 52 der Schneideinrichtung 50 bevorratet werden.

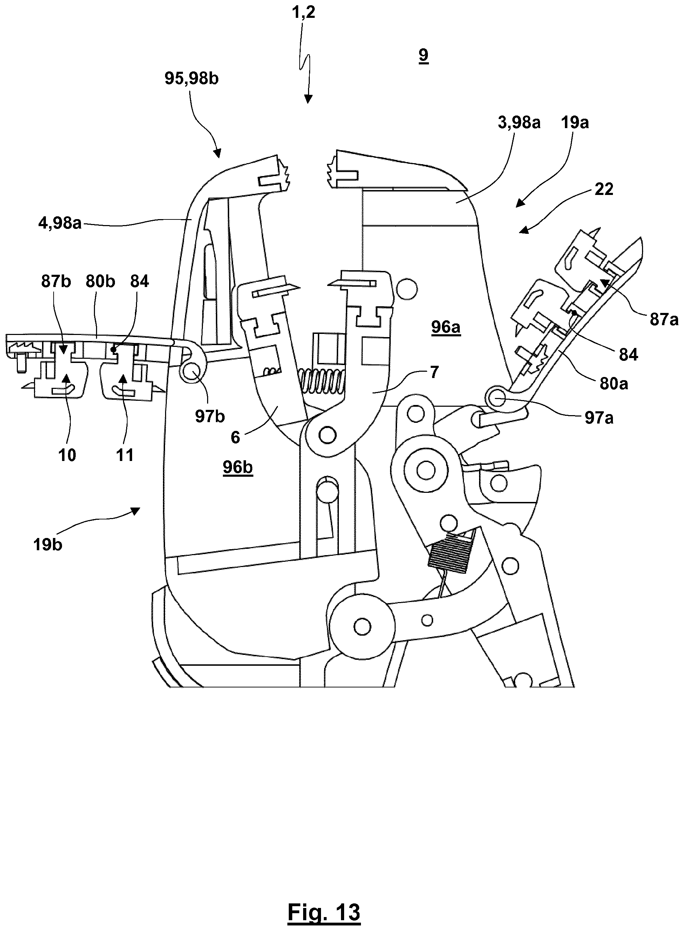

Alternativ oder kumulativ zu der Integration einer Vorrichtungseinrichtung 19 in einen Handhebel 18 kann auch eine Vorratseinrichtung 19 in einen Zangenkopf 95 integriert sein. Für das dargestellte Ausführungsbeispiel gemäß **Fig. 13** sind Vorratseinrichtungen 19a und 19b in den Zangenkopf 95 integriert. Hierbei ist die Vorratseinrichtung 19a in das starre Zangenteil 22 integriert, hier in die Zangenbacke 3. Hingegen ist die Vorratseinrichtung 19b in die bewegliche Zangenbacke 4 integriert. Hierbei besitzen die Backe 3 und 4 jeweils eine Ausnehmung 96a, 96, welche durch einen Deckel 80a, 80b (zumindest teilweise) geschlossen werden können.

Für das dargestellte Ausführungsbeispiel sind die Deckel 80a, 80b verschwenkbar an den Zangenbacken 3, 4 angelenkt im Bereich eines Gelenks 97a, 97b, wobei die Schwenkachse des Gelenks 97a, 97b vertikal zur Zeichenebene gemäß Fig. 13 und zu der Schwenkebene 9 der Zangenbacken 3, 4 orientiert ist. An den Deckeln 80a, 80b sind Zubehörteile wie die Schneidelemente 10, 11, die Klemmbacken 20, 21 und/oder Messer 51, 52, lösbar gehalten, wie dies zuvor auch für die Vorratseinrichtung 19, welche im Bereich des Handhebels 18 angeordnet ist, beschrieben worden ist. Vorzugsweise sind diese Zubehörteile über eine Schwalbenschwanz-Verbindung 87a, 87b an dem Deckel 80a, 80b gehalten. Die Deckel 80a, 80b können zu diesem Zweck Hinterschneidungen aufweisende Montagenuten 84 besitzen, deren Längsachsen eine Montageachse 88 vorgeben, welche vertikal zur Schwenkebene 9 der Zangenbacken 3, 4 orientiert sind. Es versteht sich, dass von den beiden Vorratseinrichtungen 19a, 19b auch nur eine Vorratseinrichtung an einem Zangenkopf vorgesehen sein kann.

Für das dargestellte Ausführungsbeispiel ist die Ausnehmung 96a der Vorratseinrichtung 19a zwischen dem vorderen Endbereich der Zangenbacke 3, an welchem die Klemmbacke 21 gehalten ist, und dem Gelenk 24 angeordnet. Zumindest teilweise erstreckt sich die Ausnehmung 96a seitlich der gegenüber der Zangenbacke 3 verschieblich geführten Abisolierbacke 7. Vorzugsweise bildet eine in Fig. 13 nicht dargestellte Wandung einerseits den Boden der Ausnehmung 96a und andererseits stellt diese Wandung eine Gleitfläche zwecks Gleitführung der Abisolierbacke 7 gegenüber der Zangenbacke 3 bereit. Hingegen ist die Vorratseinrichtung 19b ungefähr im Bereich des Gelenks 12, nämlich seitlich von diesem, angeordnet.

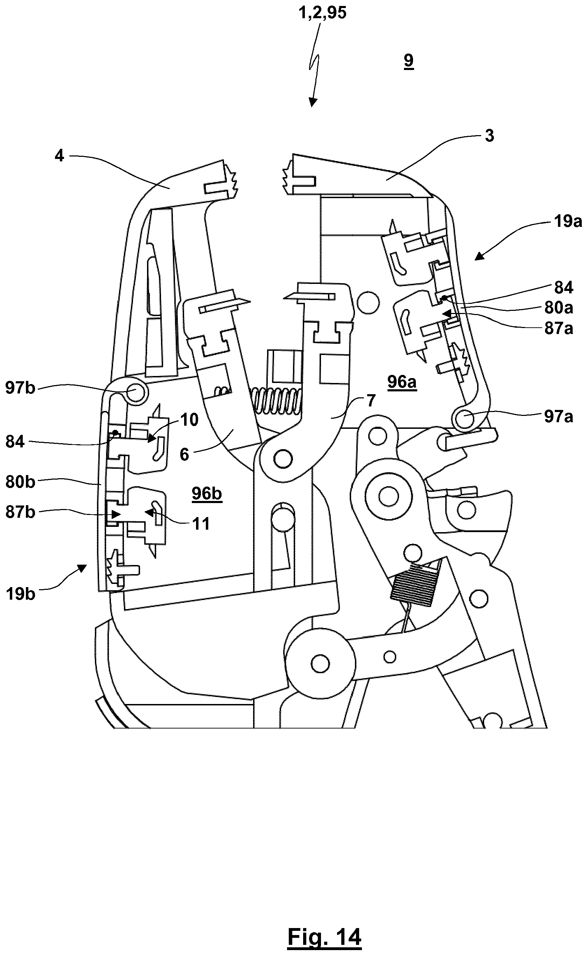

Die Deckel 80a, 80b können in der geschlossenen Stellung gemäß **Fig. 14** mit den Zangenbacken 3, 4 verrastet, verriegelt oder anderweitig gesichert werden, ohne dass dies im Detail in den Fig. 13, 14 dargestellt ist. Möglich ist auch, dass
- die Deckel 80a, 80b nicht verschwenkbar an den Zangenbacken 3, 4 gelagert sind, sondern abnehmbar sind,
- die Zubehörteile nicht an dem Deckel, sondern an den Zangenbacken 3, 4 in den Innenräumen 96a, 96b gehalten sind und/oder
- die Deckel 80a, 80b in eine andere Richtung (beispielsweise um eine Schwenkachse, welche in der Zeichenebene gemäß Fig. 13 und 14 liegt) verschwenkbar sind oder in eine andere Richtung abnehmbar oder montierbar sind.

Die Vorratseinrichtung 19, 19a, 19b sind jeweils in einem Zangenteil 98 gebildet, wobei dieses vorzugsweise als Handhebel 18, als Zangenbacke 3, 4 oder Zangenkopf 95 ausgebildet ist. Die Vorratseinrichtung 19 dient der Bevorratung mindestens eines beliebigen Zubehörteils 99 oder unterschiedlicher Zubehörteile, bei welchem oder welchen es sich beispielsweise um ein Schneidelement 9, 10, eine Klemmbacke 20, 21, ein Messer 51, 52 und/oder ein Pressgesenk für eine Presszange handeln kann.

### BEZUGSZEICHENLISTE

- 1: Abisolierwerkzeug
- 2: Abisolierzange
- 3: Zangenbacke (fest)
- 4: Zangenbacke (bewegbar)
- 5: Abisoliereinheit
- 6: Abisolierbacke
- 7: Abisolierbacke
- 8: Gelenk
- 9: Schwenkebene
- 10: Schneidelement
- 11: Schneidelement
- 12: Gelenk
- 13: Kontaktfläche
- 14: Kontaktfläche
- 15: Abisolierachse
- 16: Antrieb
- 17: Handhebel (fest)
- 18: Handhebel (bewegbar)
- 19: Vorratseinrichtung
- 20: Klemmbacke
- 21: Klemmbacke
- 22: starres Zangenteil
- 23: Lagerbolzen
- 24: Gelenk
- 25: Lagerbolzen
- 26: Gelenk
- 27: Druckhebel
- 28: Lagerbolzen
- 29: Lager
- 30: Rolle
- 31: Führungskontur
- 32: Führungskonturabschnitt
- 33: Führungskonturabschnitt
- 34: Führungskonturabschnitt
- 35: Lagerbolzen
- 36: Zuglasche
- 37: Langloch
- 38: Ausnehmung
- 39: Wandung
- 40: Feder
- 41: Absatz
- 42: Lager
- 43: Rolle
- 44: Kabel
- 45: Maul
- 46: Abstandshalter
- 47: Messer
- 48: Messer
- 49: Feder
- 50: Schneideinrichtung
- 51: Messer
- 52: Messer
- 53: Abstützelement
- 54: Einstellelement
- 55: Führungsschlitz
- 56: Montagenut
- 57: Montagenut
- 58: Montageachse
- 59: Montageachse
- 60: Montageelement
- 61: Montageelement
- 62: Ausnehmung
- 63: Ausnehmung
- 64: Seitenwandung
- 65: Seitenwandung
- 66: Sicherungselement
- 67: Haltekörper
- 68: Kontaktfläche
- 69: Handhabungsfläche
- 70: Führungsnut
- 71: Führungsnut
- 72: Ummantelung
- 73: Grundkörper
- 74: Grundschenkel
- 75: Seitenschenkel
- 76: Seitenschenkel
- 77: Wandung
- 78: Wandung
- 79: Innenraum
- 80: Deckel
- 81: Schwenklager
- 82: Rastnase
- 83: Abwinklung
- 84: Montagenut
- 85: Feder
- 86: Schwalbenschwanz-Verbindung
- 87: Schwalbenschwanz-Verbindung
- 88: Montageachse
- 89: Antrieb
- 90: Betätigungsorgan
- 91: Rast- oder Verriegelungseinrichtung
- 92: Bohrung
- 93: Bohrung
- 94: Verriegelungselement
- 95: Zangenkopf
- 96: Ausnehmung
- 97: Gelenk
- 98: Zangenteil
- 99: Zubehörteil

## Patentansprüche

1. Zangenteil (98) mit einer Vorratseinrichtung (19) für die Bevorratung mindestens eines Zubehörteils (99), wobei
a) das Zangenteil (98) mit einem Grundkörper (73) und mit einem Deckel (80) gebildet ist,
b) wobei der Grundkörper (73) einen offenen Querschnitt besitzt, welcher durch den Deckel (80) unter Ausbildung eines Innenraums (79) zumindest teilweise verschließbar ist, und
c) das Zubehörteil (99) in dem Innenraum (79) angeordnet ist
**dadurch gekennzeichnet, dass**
das Zubehörteil (99) ein austauschbares Schneidelement (10, 11), Klemmelement (20, 21) oder Presselement ist, welches zur Bevorratung in dem Zangenteil (98) über denselben Haltemechanismus in dem Innenraum (79) gehalten ist wie in einer Betriebsstellung an einem Zangenkopf und/oder das Zangenteil (98) ein Zangenkopf (95) oder eine Zangenbacke (3, 4) ist.

2. Zangenteil (98) nach Anspruch 1, **dadurch gekennzeichnet, dass** das Zubehörteil (99) an dem Deckel (80) gehalten ist.

3. Zangenteil (98) nach einem der vorhergehenden Ansprüche, **dadurch gekennzeichnet, dass** der Deckel (80) abnehmbar ist.

4. Zangenteil (98) nach einem der vorhergehenden Ansprüche, **dadurch gekennzeichnet, dass** der Deckel (80) verschwenkbar an dem Grundkörper (73) des Zangenteils (98) gelagert ist.

5. Zangenteil (98) nach einem der vorhergehenden Ansprüche, **dadurch gekennzeichnet, dass** der Deckel (80) in einer Schließstellung mit dem Grundkörper (73) verrastet oder verriegelt ist.

6. Zangenteil (98) nach einem der vorhergehenden Ansprüche, **dadurch gekennzeichnet, dass**
a) das Zubehörteil (99) über eine Schwalbenschwanz-Verbindung (87) an dem Zangenteil (98) gehalten werden kann,
b) wobei der Grundkörper (73) oder der Deckel (80) eine Montagenut (88) oder ein Montageelement der Schwalbenschwanz-Verbindung (87) ausbildet und
c) die Montage der Schwalbenschwanz-Verbindung (87) zwischen Zubehörteil (99) und Deckel (80) oder Grundkörper (73) in Richtung einer Montageachse (88) erfolgt, welche vertikal zu einer Schwenkebene (9) der Handhebel (18, 19) oder von Handhebeln (18, 19) und/oder der Zangenbacken (3, 4) orientiert ist.

7. Zangenteil (98) nach Anspruch 6, **dadurch gekennzeichnet, dass**
a) das Zubehörteil (99) an dem Deckel (80) gehalten ist,
b) das Zubehörteil (99) das Montageelement (60, 61) der Schwalbenschwanz-Verbindung (87) ausbildet,
c) der Deckel (80) die Montagenut (84) der Schwalbenschwanz-Verbindung (87) ausbildet,
d) in geschlossenem Zustand des Deckels (80) ein Austritt des Montageelements (60, 61) des Zubehörteils (99) aus der Montagenut (84) des Deckels (80) blockiert ist durch eine den Innenraum (79) begrenzende Innenwandung des Grundkörpers (73).

8. Zangenteil (98) nach einem der Ansprüche 1 bis 7, **dadurch gekennzeichnet, dass** das Zangenteil (98) ein Handhebel (18) ist.

9. Zangenteil (98) nach Anspruch 8, **dadurch gekennzeichnet, dass** der Deckel (80) auf der einem anderen Handhebel (17) zugewandten Seite des Grundkörpers (73) angeordnet ist.

10. Zangenteil (98) nach Anspruch 8 oder 9, **dadurch gekennzeichnet, dass** das Zubehörteil (99) in Richtung einer quer zu einer Längsachse des Handhebels (18) orientierten Montageachse (88) mit dem Handhebel (18) montierbar oder demontierbar ist.

11. Zangenteil (98) nach einem der Ansprüche 8 bis 10, **dadurch gekennzeichnet, dass** der Deckel (80) in seinem einem Zangenkopf (95) zugewandten Endbereich verschwenkbar an dem Grundkörper (73) gelagert ist.

12. Zange mit einem Zangenteil (98) nach einem der vorhergehenden Ansprüche.

13. Abisolierzange (1) mit einem Zangenteil (98) nach einem der Ansprüche 1 bis 11, **dadurch gekennzeichnet, dass**
a) eine Abisoliereinheit (5) vorhanden ist,
aa) deren Betriebsstellung mit einem Schneidhub in einer Schwenkebene (9) durch einen mit dem oder einem Handhebel (18) gebildeten Antrieb (16) veränderbar ist und
ab) die über den Antrieb (16) über einen Abisolierhub entlang einer Abisolierachse (15) bewegbar ist,
ac) wobei mindestens ein das Zubehörteil (99) bildende Schneidelement (10, 11) auswechselbar mit der Abisoliereinheit (5) montiert ist,
b) die Montage des Schneidelements (10, 11) mit der Abisoliereinheit (5) über eine Montagenut (56, 57) erfolgt, in welche formschlüssig ein Montageelement (60, 61) einschiebbar ist, womit eine Schwalbenschwanz-Verbindung (86) zwischen Schneidelement (10, 11) und Abisoliereinheit (5) gebildet werden kann,
c) wobei der Grundkörper (73) oder der Deckel (80) des Zangenteils (98) ein korrespondierend ausgebildetes Montageelement oder eine korrespondierend ausgebildete Montagenut besitzt und
d) das Schneidelement (10, 11) unter Nutzung seines Montageelements (60, 61) oder seiner Montagenut über eine Schwalbenschwanz-Verbindung (87) an dem Montageelement oder der Montagenut des Deckels (80) oder des Grundkörpers (73) in dem Innenraum (79) des Zangenteils (98) gehalten werden kann.

## Claims

1. Pliers part (98) comprising a storage device (19) for the storage of at least one accessory part (99), where
a) the pliers part (98) comprises a base body (73) and a lid (80),
b) the base body (73) comprises an open cross section which can at least partially be closed by the lid (80) under the formation of an inner chamber (79) and
c) the accessory part (99) is arranged in the inner chamber (79),
**characterised in that**
the accessory part (99) is an exchangeable cutting element (10, 11), clamping element (20, 21) or pressing element which is held for the storage in the pliers part (98) by the same holding mechanism in the inner chamber (79) as being held in an operating position at a pliers head and/or the pliers part (98) is a pliers head (95) or a pliers jaw (3,4).

2. Pliers part (98) of claim 1, **characterised in that** the accessory part (99) is held at the lid (80).

3. Pliers part (98) of one of the preceding claims, **characterised in that** the lid (80) is removable.

4. Pliers part (98) of one of the preceding claims, **characterised in that** the lid (80) is supported for being pivoted by the base body (73) of the pliers part (98).

5. Pliers part (98) of one of the preceding claims, **characterised in that** in a closed position the lid (80) is latched or locked with the base body (73).

6. Pliers part (98) of one of the preceding claims, **characterised in that**
a) the accessory part (99) can be held at the pliers part (98) by a dovetail-connection (87)
b) where the base body (73) or the lid (80) forms an assembly groove (88) or an assembly element of the dovetail-connection (87) and
c) the assembly of the dovetail-connection (87) between the accessory part (99) ant the lid (80) or base body (73) is performed along an assembly axis (88) which has an orientation vertical to a pivoting plane (9) of the hand levers (18, 19) or of pliers jaws (3, 4).

7. Pliers part (98) of claim 6, **characterised in that**
a) the accessory part (99) is held by the lid (80),
b) the accessory part (99) forms the assembly element (60, 61) of the dovetail-connection (87)
c) the lid (80) forms the assembly groove (84) of the dovetail-connection (87),
d) in the closed state of the lid (80) an exit of the assembly element (60, 61) of the accessory part (99) from the assembly groove (84) of the lid (80) is blocked by an inner wall of the base body (73) which limits the inner chamber (78).

8. Pliers part (98) of one of claims 1 to 7, **characterised in that** the pliers part (98) is a hand lever (18).

9. Pliers part (98) of claim 8, **characterised in that** the lid (80) is arranged on a side of the base body (73) facing towards the other hand lever (17).

10. Pliers part (98) of claim 8 or 9, **characterised in that** the accessory part (99) can be assembled to the hand lever (18) and disassembled along an assembly axis (88) having an orientation transverse to a longitudinal axis of the hand lever (18).

11. Pliers part (98) of one of claims 8 to 10, **characterised in that** the lid (80) is supported for being pivoted by the base body (73) in an end region of the lid (80) facing towards the pliers head (95).

12. Pliers comprising a pliers part (98) according to one of the preceding claims.

13. Stripping pliers (1) comprising a pliers part (98) according to one of claims 1 to 11, **characterised in that**
a) a stripping unit (5) is provided,
aa) the operating position of which can be changed during a cutting stroke in a pivoting plane (9) by a drive (16) comprising the or a hand lever (18) and
ab) which can be moved by the drive (16) over a stripping stroke along a stripping axis (15),
ac) where at least one cutting element (10, 11) forming the accessory part (99) is exchangeably mounted to the stripping unit (5),
b) the assembly of the cutting element (10, 11) to the stripping unit (5) is provided by use of an assembly groove (56, 57) into which it is possible to slide with a positive form lock an assembly element (60, 61) so that a dovetail-connection (86) is formed between the cutting element (10, 11) and the stripping unit (5),
c) the base body (73) or the lid (80) of the pliers part (98) comprises a corresponding assembly element or a corresponding assembly groove and
d) by use of its assembly element (60, 61) or its assembly groove it is possible to hold the cutting element (10, 11) by use of a dovetail-connection (87) at the assembly element or the assembly groove of the lid (80) or of the base body (73) in the inner chamber (79) of the pliers part (98).

## Revendications

1. Elément de pince (98), avec un dispositif de stockage (19) pour le stockage d'au moins un accessoire (99),
a) l'élément de pince (98) étant formé d'un corps de base (73) et d'un couvercle (80),
b) le corps de base (73) possédant une section transversale ouverte qui peut être fermée au moins partiellement par le couvercle (80) avec formation d'un espace intérieur (79), et
c) l'accessoire (99) étant disposé dans l'espace intérieur (79),
**caractérisé en ce que**
l'accessoire (99) est un élément de découpe (10, 11), un élément de serrage (20, 21) ou un élément de pressage remplaçable qui, pour le stockage dans l'élément de pince (98), est retenu dans l'espace intérieur (79) par le biais du même mécanisme de retenue que dans une position de fonctionnement sur une tête de pince, et/ou l'élément de pince (98) est une tête de pince (95) ou une mâchoire de pince (3, 4).

2. Elément de pince (98) selon la revendication 1, **caractérisé en ce que** l'accessoire (99) est retenu sur le couvercle (80).

3. Elément de pince (98) selon l'une des revendications précédentes, **caractérisé en ce que** le couvercle (80) peut être enlevé.

4. Elément de pince (98) selon l'une des revendications précédentes, **caractérisé en ce que** le couvercle (80) est supporté de façon pivotante sur le corps de base (73) de l'élément de pince (98).

5. Elément de pince (98) selon l'une des revendications précédentes, **caractérisé en ce que** le couvercle (80) est encliqueté ou verrouillé avec le corps de base (73) dans une position de fermeture.

6. Elément de pince (98) selon l'une des revendications précédentes, **caractérisé en ce que**
a) l'accessoire (99) peut être retenu sur l'élément de pince (98) par le biais d'une liaison en queue d'aronde (87),
b) le corps de base (73) ou le couvercle (80) constituant une rainure de montage (88) ou un élément de montage de la liaison en queue d'aronde (87) et
c) le montage de la liaison en queue d'aronde (87) entre l'accessoire (99) et le couvercle (80) ou le corps de base (73) s'effectue dans direction d'un axe de montage (88), lequel est orienté verticalement par rapport à un plan de pivotement (9) des leviers manuels (18, 19) ou de leviers manuels (18, 19) et/ou des mâchoires de pince (3, 4).

7. Elément de pince (98) selon la revendication 6, **caractérisé en ce que**
a) l'accessoire (99) est retenu sur le couvercle (80),
b) l'accessoire (99) constitue l'élément de montage (60, 61) de la liaison en queue d'aronde (87),
c) le couvercle (80) constitue la rainure de montage (84) de la liaison en queue d'aronde (87),
d) dans l'état fermé du couvercle (80), une sortie de l'élément de montage (60, 61) de l'accessoire (99) hors de la rainure de montage (84) du couvercle (80) est bloquée par une paroi intérieure du corps de base (73) qui limite l'espace intérieur (79).

8. Elément de pince (98) selon l'une des revendications 1 à 7, **caractérisé en ce que** l'élément de pince (98) est un levier manuel (18).

9. Elément de pince (98) selon la revendication 8, **caractérisé en ce que** le couvercle (80) est disposé sur le côté du corps de base (73) qui est tourné vers un autre levier manuel (17).

10. Elément de pince (98) selon la revendication 8 ou 9, **caractérisé en ce que,** en direction d'un axe de montage (88) orienté transversalement à un axe longitudinal du levier manuel (18), l'accessoire (99) peut être monté ou démonté avec le levier manuel (18).

11. Elément de pince (98) selon l'une des revendications 8 à 10, **caractérisé en ce que,** dans sa zone d'extrémité tournée vers une tête de pince (95), le couvercle (80) est supporté de façon pivotante sur le corps de base (73).

12. Pince avec un élément de pince (98) selon l'une des revendications précédentes.

13. Pince à dénuder (1) avec un élément de pince (98) selon l'une des revendications 1 à 11,
**caractérisée en ce que**
a) il est prévu une unité à dénuder (5)
aa) dont la position de fonctionnement peut être modifiée avec une course de coupe dans un plan de pivotement (9) par un entraînement (16) formé avec le ou avec un levier manuel (18) et
ab) qui peut être déplacée par le biais de l'entraînement (16) par le biais d'une course de dénudement le long d'un axe de dénudement (15),
ac) au moins un élément de coupe (10, 11) formant l'accessoire (99) étant monté de façon interchangeable avec l'unité à dénuder (5),
b) le montage de l'élément de coupe (10, 11) avec l'unité à dénuder (5) s'effectuant par le biais d'une rainure de montage (56, 57) dans laquelle un élément de montage (60, 61) peut être inséré par liaison de forme, ce qui permet de former une liaison en queue d'aronde (86) entre l'élément de coupe (10, 11) et l'unité à dénuder (5),
c) le corps de base (73) ou le couvercle (80) de l'élément de pince (98) possédant un élément de montage constitué de façon correspondante ou une rainure de montage constituée de façon correspondante et
d) l'élément de coupe (10, 11) pouvant, avec utilisation de son élément de montage (60, 61) ou de sa rainure de montage, être retenu dans l'espace intérieur (79) de l'élément de pince (98) par le biais d'une liaison en queue d'aronde (87) sur l'élément de montage ou la rainure de montage du couvercle (80) ou du corps de base (73).
